# EUROPÄISCHE PATENTSCHRIFT

(11) **EP 2 996 006 B1**
(45) Veröffentlichungstag und Bekanntmachung des Hinweises auf die Patenterteilung: **29.04.2020**
(21) Anmeldenummer: 15184496.6
(22) Anmeldetag: 09.09.2015
(51) Int. Cl.: G05B 23/02, G05B 19/418

(54) **VERFAHREN UND VORRICHTUNG ZUR ÜBERWACHUNG EINES FERTIGUNGS- UND/ODER MONTAGEPROZESSES**
METHOD AND APPARATUS FOR MONITORING A PRODUCTION AND/OR MOUNTING PROCESS
PROCEDE ET DISPOSITIF DE SURVEILLANCE D'UN PROCESSUS DE MONTAGE ET/OU UN PROCESSUS DE FABRICATION

(30) Priorität: 10.09.2014 DE 102014218096
(43) Veröffentlichungstag der Anmeldung: 16.03.2016
(73) Patentinhaber: Fraunhofer-Gesellschaft zur Förderung der angewandten Forschung e.V., 80686 München (DE); Universität Stuttgart, 70174 Stuttgart (DE)
(72) Erfinder: Müller, Felix Georg, 70178 Stuttgart (DE); Pflüger, Marius, 70619 Stuttgart (DE)
(74) Vertreter: Pfenning, Meinig & Partner mbB

(56) Entgegenhaltungen:
- DE-A1- 10 326 427
- US-A1- 2005 197 803
- US-A1- 2006 177 119
- US-A1- 2011 050 878

## Beschreibung

Die Erfindung betrifft ein Verfahren und eine Vorrichtung zur Überwachung eines Fertigungs- und/oder Montageprozesses, wobei ein Fertigungs- und/oder Montageprozess mit zumindest drei Schritten mit zumindest einem Sensor je Schritt beobachtet wird und hieraus ein Ergebnis der Überwachung abgeleitet wird.

Fertigungssysteme (FS) und Montagesysteme (MS) weisen Sub-Systeme auf, im weiteren Verlauf Stationen genannt, die definierte technische Inhalte wiederholend ausführen. Wenn kein Mitarbeiter regulär in diese Inhalte involviert ist, handelt es sich in der Regel um mechatronische Systeme, da jede Station neben mechanischen Einheiten, wie z.B. einer Fügevorrichtung, auch Sensorik und Aktorik besitzt, die angesteuert, geregelt und ausgewertet wer- den kann. Bei Stationen, an denen Mitarbeiter wiederholend technische Inhalte übernehmen, handelt es sich um soziotechnische Systeme. Hierbei werden Aufgaben wie z.B. Bauteile fügen oder prüfen, auf Basis von impliziten oder expliziten Informationen durchgeführt. Durch die Verknüpfung von Stationen entsteht, je nach Einzelaufgabe, ein Fertigungs- und/oder Montagesystem, Bei vollautomatisierten Fertigungssystemen mit mechatronischen Stationen liegen alle Daten über den aktuellen Betrieb in digitaler Form vor, dies ist für teilautomatisierte oder manuelle Tätigkeiten jedoch nicht der Fall. Verschiedene, nicht harmonisierte oder nicht öffentliche Standards in der Steuerungstechnik bzw, im Anlagenbau zur Erfassung, Übermittlung und Verarbeitung von Produktionsdaten erzeugen eine hohe Intransparenz und Individualität bezüglich des vorliegenden Datenmaterials. Um operative (zeitliche) Abhängigkeiten in einem wie oben beschriebenen System aufzudecken und hieraus Rückschlüsse auf die Größe der Abhängigkeitsverluste und deren direkte Ursachen und Gründe ziehen zu können, sind stark auf den Anwendungsfall angepasste Methoden nötig. Aufwandstreiber bei der Generierung einer solchen angepassten Analysemethode sind hierbei vor allem:
- Manuelle Tätigkeiten erfordern Einbinden einer Mensch-Maschine-Schnittstelle, um auswertbare Daten über den Prozess zu erzeugen (z.B. Eingabemaske, Barcode-Scanner, Schaltersignale etc.).
- Signale / Daten / Variablen und Protokolle sind herstellerspezifisch und deren Auswertung in den einzelnen Steuerungen ist individuell implementiert.
- Kurze Takte / hohe Flussgeschwindigkeiten der Bauteile in verketteten Systemen mit automatischer Werkstückweitergabe (über viele Stationen) machen eine manuelle Auswertung in der Regel unwirtschaftlich oder sogar unrealistisch.
- Es ist kein zeit- oder ortsnaher Rückschluss auf die Störursache gegeben, falls die Störauswirkung zeitlich und/oder örtlich verzögert auftritt.
- Starr verkettete / minimal gepufferte Linien sind schwingfähige, anregbare Systeme (Auf- und Abschwingen von Auslastungen einzelner Arbeitsbereiche durch innere und äußere statistsche/systematische Einflüsse).
- Die Zuordnung von geteilten Ressourcen (z.B. eine Laserstrahlquelle für mehrere Stationen, ein Mitarbeiter erfüllt regulär Aufgaben an mehreren Stationen) ist nicht vorbestimmt determiniert und wird situativ entschieden.

Unter diesen und weiteren Rahmenbedingungen müssen trotzdem kontinuierlich quantitative Aussagen über den laufenden Betrieb eines Fertigungssystems/Montagesystems z.B. hinsichtlich einem oder mehreren folgender Punkte abgeleitet werden:
- Verfügbarkeit der Anlage
- Leistungsgrad des Fertigungssystems/Montagesystems, Geschwindigkeitsverluste
- Qualitätsrate bzw. Ausschussrate und Nacharbeitsquote
- Durchschnittliche Durchlaufzeit (DLZ)
- Durchschnittlich benötigte Mitarbeiteranzahl
- Maximale und durchschnittlich erzielbare Ausbringung

In der Planungs- und Optimierungsphase von Fertigungssystemen/Montagesystemen werden häufig zudem eine oder mehrere folgender Daten benötigt:
- Aktueller Engpass der Anlage
- Taktzeiten der Einzelprozesse, Taktabstimmung der Prozesse zueinander
- Durchschnittlicher Umlaufbestand (work in process, WIP)
- Rüstzeit pro Variante
- Real-Automatisierungsgrad
- Auswirkung von Störungen auf angrenzende Prozesse
- Fehlerursachen und -häufigkeiten

Problematisch ist hierbei, dass verschiedene Fertigungssysteme bzw. Montagesysteme sich in ihrem Aufbau und ihrer grundlegenden Datenstruktur aktuell signifikant stark unterscheiden und somit keine Methode zur Analyse der Abhängigkeiten zwischen den einzelnen Prozessen bzw. Prozessschritten existiert, die ohne strukturelle Anpassung universell anwendbar ist. Jedes bekannte datenbasierte Auswertungsverfahren (falls von allen Prozessen kontinuierliche Daten vorliegen) muss an die vorliegende Datenstruktur angepasst werden, um diese hinsichtlich quantitativer Merkmale (z.B. Zeit) auswerten zu können. Es existieren nur universelle Methoden, die die auf- und abbauenden Bestände zwischen den Prozessen als Folge von auftretenden Ereignissen untersuchen. Hieraus ist keine Ursachenzuordnung möglich. Bei fest integrierten Überwachungssystemen in Fertigungs- und Montagesysteme sind qualitative Aussagen (Kategorie und/oder Ursache) ohne weitere Aufwände z.B. durch die Implementierung von Expertenwissen aus dem zugehörigen Produktionsbereich, aus den digitalen Sensordaten in der Regel nicht direkt extrahierbar.

Derartige Systeme sind z.B. aus der US 2006/177119 A1 und der DE 10326427 A1 bekannt.

MES-Systeme zur echtzeitnahmen Kontrolle und Steuerung der Produktion basieren auf der Maschinendatenerfassung (MDE) bzw. Betriebsdatenerfassung (BDE). Diese Systeme lesen die Steuerungen der Einzelmaschine aus und gewinnen so grundlegende Daten über den aktuellen Betriebszustand. In verketteten Anlagen (z.B. bestehend aus vielen Einzelstationen, die fest durch automatisierte Transportsysteme miteinander verbunden sind) werden vom Anlagenlieferant alle Stördaten der einzelnen Prozesse an einen zentralen Maschinenleitstand übermittelt. Dort hat der Bediener die Übersicht über alle vorliegenden Störungen und besonderen Ereignisse. Dies ist soweit nur möglich, wenn alle einzelnen Systemlieferanten bzw, der Anlagenlieferant sich auf einen gemeinsamen Kommunikationsstandard einigen oder nur Steuerungsgeräte von einem Hersteller verbaut werden.

Ein Beispiel hierfür wäre von ATS-AUTOMATION eine Anlagenproduktivitätsauswertung mit stationsspezifischen Ausfallraten und Fehlerstatistiken, die über ein Webinterface oder ein mobiles Endgerät von überall aus eingesehen werden kann (ATS).

Zur systematischen Produktivitätsüberwachung von manuellen Arbeitsplätzen kommen Interfaces zur Anwendung, d.h. der Bediener kann seine Tätigkeiten bei Beginn und/oder bei Abschluss per Barcode oder Eingabe dem System melden.

Zur Optimierung von Produktionslinien und -bereichen mittels Wertstrommethode werden in der Phase der Ist-Wertstromaufnahme für einen oder mehrere Produkt-Repräsentanten die oben genannten Kennzahlen manuell aufgenommen. Hierfür kommen einfache Werkzeuge wie Stoppuhren, Taschenrechner, Strichlisten etc. zum Einsatz und die involvierten Mitarbeiter werden anhand von vier Leitfragen interviewt. Es handelt sich um eine Momentaufnahme des entsprechenden Produktionsbereichs und zielt primär auf die Optimierung der Produktionsorganisation ab.

Speziell auf die Analyse von Engpässen in Fertigungssystemen/ Montagesystemen ist die "Average Active Period Method" ausgelegt. Hierbei werden anhand des Prozessstatus und der dazugehörigen gemessenen Dauer des Status der primäre und eventuell auch sekundäre Engpass im System ermittelt. Das Ergebnis wird mittels Konfidenzintervall-Berechnung statistisch abgesichert. Die Ursache für den aufgedeckten Engpass muss in einem nachfolgenden Schritt gefunden werden, da das Verfahren nur anhand der Gesamtprozesszeit den Engpassprozess festlegt, diese "Blackbox"-Zeit aber nicht weiter aufschlüsselt.

Universelle Aussagen können mit bestehenden Methoden nur durch die Modellierung eines Fertigungssystems/Montagesystems durch "Blackbox"-Module getroffen werden. Das bedeutet, dass entweder das gesamte Fertigungssystem/Montagesystem als eine Blackbox betrachtet wird und nur die oben genannten Eigenschaften als z.B. "Gesamtanlagen-Effektivität (OEE)" gemessen wird (Betrachtung der Ausbringung, die am Ende der Anlage her- auskommt) oder das Fertigungssystem/Montagesystem aus einzelnen Blackbox-Stationen modelliert wird und somit nur die Verknüpfungen untersucht werden (z.B. "Average Active Period Method"). Die Analyse oder Klassifizierung der Gründe für bestimmte Abhängigkeiten ist somit nicht abgedeckt und muss anschließend manuell durchgeführt werden.

Als Nachteile können hieraus folgende Punkte abgeleitet werden:
- Hoher Integrationsaufwand für Abhängigkeitsanalysen im Fall von datenseitig homogenen Systemen (abhängig vom Steuerungshersteller)
- Keine kontinuierliche Abhängigkeitsanalyse von datenseitig heterogenen oder manuellen Systemen ohne strukturelle Anpassung an den vorliegenden spezifischen Fall möglich
- Ursachenzuordnung bei Abhängigkeitsverlusten entweder durch Expertenwissen hinterlegt oder in einem individuellen Analyseprozess am Ursachenort nachgeschaltet
- Manuelle Systeme oder geteilte Ressourcen, die nicht zeitgesteuert, sondern bedarfsgesteuert zugeteilt werden, nicht kontinuierlich hinsichtlich ihrer Abhängigkeiten und den dazugehörigen Ursachen überwachbar.
- Priorisierung der Abstellmaßnahmen bei simultan auftretenden Ereignissen abhängig von Erfahrungswissen und Fähigkeiten des Mitarbeiters und somit nicht immer zugunsten der Gesamtproduktivität

Aufgabe der vorliegenden Erfindung ist es, die vorstehend genannten Nachteile zu überwinden und eine maschinendatenunabhängige und aufgabenunabhängige Analyse von Abhängigkeiten in Fertigungssystemen und/oder Montagesystemen und deren Auswirkungen zu ermitteln und eine qualitative Ursachenzurordnung zu ermöglichen. Vorzugsweise soll die Auswertung kontinuierlich erfolgen und echtzeitnahe Ergebnisse liefern, Darüber hinaus soll vorzugsweise der apparative Aufbau zur Durchführung des Verfahrens universell auf alle sichtbaren Prozesse in einem Fertigungssystem und/oder Montagesystem anwendbar sein und nicht durch den Automatisierungsgrad oder das vorliegende Datenmaterial eingeschränkt sein. Vorzugsweise sollte der apparative Aufbau mobil sein und universell in kürzester Zeit ohne Eingriff in das produzierende Fertigungssystem und/oder Montagesystem durch reine Beobachtung der einzelnen Prozesse integrierbar sein.

Die Aufgaben werden gelöst durch das Verfahren zur Überwachung eines Fertigungs- und/oder Montageprozesses nach Anspruch 1 sowie durch die Vorrichtung zur Überwachung eines Fertigungs- und/oder Montageprozesses nach Anspruch 9. Die jeweiligen abhängigen Ansprüche geben vorteilhafte Weiterbildung des erfindungsgemäßen Verfahrens und der erfindungsgemäßen Vorrichtung an.

Erfindungsgemäß ist ein Verfahren zur Überwachung eines Fertigungs- und/oder Montageprozesses. Unter einer Überwachung kann hierbei verstanden werden, dass der entsprechende Prozess beobachtet wird und aus den Beobachtungen zumindest ein Ergebnis abgeleitet wird, das einen Zustand des Prozesses betrifft. Dies wird weiter unten noch detailliert ausgeführt.

Unter einem Fertigungs- und/oder Montageprozess wird hierbei ein Verfahren oder Prozess verstanden, der einen Ablauf mit zumindest einen vorgelagerten Schritt, einen Hauptschritt und einen nachgelagerten Schritt aufweist. Der Prozess kann darüber hinaus weitere Schritte aufweisen, die in entsprechender Weise wie der vorgelagerte Schritt, der Hauptschritt oder der nachgelagerte Schritt in die erfindungsgemäße Überwachung eingehen können.

Unter einem Ablauf kann hier die Menge aller in die Überwachung eingehen- den Schritte in einem bestimmten Zeitraum, zu einem bestimmten Zeitpunkt und/oder in einem bestimmten Takt verstanden werden. Ein Ablauf weist erfindungsgemäß also zumindest den vorgelagerten Schritt, den Hauptschritt und den nachgelagerten Schritt auf, kann jedoch darüber hinaus weitere Schritte aufweisen.

Der vorgelagerte Schritt, der Hauptschritt und der nachgelagerte Schritt können hierbei Schritte sein, die nacheinander auf Objekte angewendet werden, die in dem Fertigungs- und/oder Montageprozess bearbeitet werden. Beispielsweise kann das zu bearbeitende Objekt zunächst im vorgelagerten Schritt bearbeitet werden, anschließend im Hauptschritt und danach im nachgelagerten Schritt. Es kann also der nachgelagerte Schritt auf dem Ergebnis des Hauptschrittes aufbauen und der Hauptschritt auf dem Ergebnis des vorgelagerten Schrittes. Vorteilhafterweise ist der Fertigungs- und/oder Montageprozess dabei ein Prozess, in dem die Schritte eines Ablaufs wiederholt auf gleichartige Objekte oder Objektvarianten ausgeführt werden, wie beispielsweise bei einer Fertigungsstraße bzw. bei Serienfertigung. Objekte können hier vorteilhaft Bauteile sein.

Erfindungsgemäß werden zumindest drei der Schritte des Ablaufs des Fertigungs- und/oder Montageprozesses jeweils durch zumindest einen Sensor beobachtet, der jeweils ein Sensorsignal erzeugt. Es wird also zumindest der vorgelagerte Schritt durch einen diesem vorgelagerten Schritt zugeordneten Sensor beobachtet, der Hauptschritt durch einen dem Hauptschritt zugeordneten Sensor und der nachgelagerte Schritt durch einen dem nachgelagerten Schritt zugeordneten Sensor. Optionale weitere Schritte des Fertigungs- und/oder Montageprozesses können durch diesen weiteren Schritten jeweils zugeordnete weitere Sensoren beobachtet werden.

Bevorzugterweise sind die Sensoren externe Sensoren, die eine Vorrichtung zur Durchführung des entsprechenden Schrittes von außen beobachten. Die Sensorsignale sind hierbei also keine internen Messgrößen der Vorrichtung zur Durchführung des entsprechenden Schrittes, sondern geben ein oder mehrere Merkmale einer äußeren Erscheinung der entsprechenden Vorrichtung zur Durchführung des entsprechenden Schrittes zum Zeitpunkt der Beobachtung wieder.

Vorzugsweise sind die Sensoren optische Sensoren und besonders bevorzugt Kameras, die Bildsignale als Sensorsignale erzeugen. Die Sensoren können jedoch auch andere Bildsignale als Sensorsignale erzeugende Vorrichtungen sein, wie beispielsweise Röntgenkameras, Infrarotkameras, Thermographiesensor, Laserscanner und dergleichen. Sensoren können jedoch auch Lichtschranken oder taktile Sensoren sein, die keine Bildsignale erzeugen.

Die genaue Anordnung des entsprechenden Sensors wird vorzugsweise abhängig von der Ausgestaltung des beobachteten Schrittes gewählt, und zwar in solcher Weise, dass der Sensor eine Ausprägung eines durch ihn erfassten Merkmals durch den Sensor erkennen kann.

Erfindungsgemäß werden die Sensorsignale jeweils eines Ablaufes so miteinander synchronisiert, dass zu zumindest einem Betrachtungszeitpunkt, zumindest einen Betrachtungszeitraum oder einem Betrachtungstakt von jedem der Sensoren, die einen in die Überwachung eingehenden Schritt beobachten, zumindest ein Sensorsignal vorliegt. Es werden also die Schritte eines Ablaufs jeweils zum gleichen Zeitpunkt, im gleichen Zeitraum oder in einem gemeinsamen Takt ausgewertet. In vielen Ausgestaltungen der Erfindung werden die Schritte also bei Anwendung auf jeweils andere Objekte ausgewertet.

In allen Ausführungsformen des erfindungsgemäßen Verfahrens und der erfindungsgemäßen Vorrichtung ist es vorteilhaft, wenn die Sensorsignale auf Einzelbildbasis synchronisiert werden, wenn also zu den jeweiligen Betrachtungszeitpunkten jeweils ein Einzelbild jedes durch einen der Sensoren beobachteten Schrittes vorliegt. Dies kann beispielsweise über einen externen Trigger erzielt werden oder dadurch, dass jedes Einzelbild einen Zeitstempel aufweist. Die Auswahl basiert auf der Anforderung an die Güte der Bildsynchronität im vorliegenden Anwendungsfall.

Im erfindungsgemäßen Verfahren liegt nun zumindest zu einem Betrachtungszeitpunkt, einem Betrachtungsintervall oder einem Betrachtungstakt zumindest ein Sensorsignal jedes der Sensoren vor, die einen Schritt des Ablaufs beobachten. Erfindungsgemäß werden die Sensorsignale der beobachteten Schritte zumindest bereichsweise jeweils mit einem Sollwert oder Soll-Sensorsignal verglichen. Ist also der Sensor ein bilderzeugender Sensor, wie beispielsweise eine Kamera, so werden die von diesem Sensor erzeugten Bilder zumindest bereichsweise mit entsprechenden Soll-Bildern verglichen. Er- kennt der Sensor eine Markierung wie z.B. einen Bar-Code, kann der Sollwert ein vorgegebener Wert sein, mit dem der vom Sensor erkannte Wert verglichen wird.

Dabei sind die entsprechenden Sollwerte oder Soll-Sensorsignale zumindest bereichsweise jeweils einer Ausprägung zumindest eines Merkmals jenes Schrittes zugeordnet, der durch den das entsprechende Sensorsignal erzeugenden Sensor beobachtet wird. Ist der Sensor ein bilderzeugender Sensor, wie beispielsweise eine Kamera, so kann ein Soll-Sensorsignal, das in diesem Fall ein Bildsignal ist, zumindest bereichsweise einer Ausprägung eines Merkmals zugeordnet sein, was in diesem Fall bedeutet, dass ein Bildausschnitt des Bildsignals der Ausprägung des Merkmals zugeordnet ist. Es ist jedoch stets auch möglich, dass ein vollständiges Soll-Sensorsignal einer Ausprägung eines Merkmals zugeordnet ist.

Unter einem Merkmal soll hier vorzugsweise eine Eigenschaft des entsprechenden beobachteten Schrittes verstanden werden. Unter verschiedenen Ausprägungen eines Merkmals werden dann unterschiedliche Ausprägungen dieser Eigenschaft verstanden. Es wird also unterschieden zwischen dem generischen Merkmal, das die Eigenschaft des Schrittes an sich bezeichnet, und dem konkreten Zustand oder der konkreten Ausprägung des Merkmals, welche angibt, wie das Merkmal im beobachteten Schritt tatsächlich realisiert ist. Beispielsweise könnte ein Merkmal oder generisches Merkmal in diesem Sinne das Vorhandensein eines Werkstücks in einem bestimmten Schritt zum Beobachtungszeitpunkt sein. Die Ausprägung dieses Merkmals könnte dann beschreiben, ob das Werkstück tatsächlich anwesend ist oder nicht. Eine Ausprägung könnte also sein "das Werkstück ist im Schritt anwesend" und eine andere Ausprägung könnte sein "das Werkstück ist nicht anwesend", Abhängig von der Natur des entsprechenden Merkmals kann es auch mehr als zwei Ausprägungen annehmen. Ist beispielsweise das Merkmal der Zustand eines Betriebsmittels, das bei der Durchführung des beobachteten Schrittes Anwendung findet, so können die unterschiedlichen Ausprägungen dieses Merkmals eine Vielzahl unterschiedlicher Zustände des Betriebsmittels beschreiben.

Vorzugsweise sind jeder möglichen Ausprägung oder jeder zu erwartenden Ausprägung eines Merkmals, vorzugsweise jedes Merkmals, zumindest ein Sollwert oder ein Soll-Sensorsignal zugeordnet. Jede erwartete Ausprägung der in die Überwachung eingehenden Merkmale ist also einem Sollwert oder einem Soll-Sensorsignal zugeordnet. Sind die Sensoren beispielsweise bilderzeugende Sensoren, so kann jeder Ausprägung jedes Merkmals jeweils zumindest ein Bild oder ein Bereich eines Bildes zugeordnet sein, Ist ein Sensor beispielsweise ein Barcode-Scanner, so kann die Ausprägung zum Beispiel eine bestimmte Identität sein.

Erfindungsgemäß kann nun durch den oben beschriebenen Vergleich der Sensorsignale der beobachteten Schritte mit den entsprechenden Sollwerten und/oder den entsprechenden Soll-Sensorsignalen die Ausprägung des entsprechenden Merkmals in der Beobachtung abgeleitet werden. Da jeder Sollwert bzw. jedes Soll-Sensorsignal zumindest bereichsweise einer Ausprägung des entsprechenden Merkmals zugeordnet ist, könnten entsprechende Bereiche des tatsächlich aufgenommenen Sensorsignals und des Sollwertes bzw. des Soll-Sensorsignals miteinander verglichen werden und jene Ausprägung als die Ausprägung des entsprechenden Merkmals abgeleitet werden, deren Sollwert bzw. Soll-Sensorsignal oder Bereich eines Soll-Sensorsignals am besten mit dem entsprechenden aufgenommenen Sensorsignal oder Bereich des aufgenommenen Sensorsignals übereinstimmt.

In einer vorteilhaften Ausgestaltung der Erfindung kann der jeweilige Sollwert und/oder das jeweilige Soll-Sensorsignal im entsprechenden Bereich dadurch der Ausprägung des zumindest einen Merkmals zugeordnet werden, dass ein Sensorsignal als Sollwert bzw. Soll-Sensorsignal aufgenommen wird, welches der Sensor bei Beobachtung des entsprechenden Schritts aufnimmt, wenn in dem entsprechenden Schritt das entsprechende Merkmal oder die entsprechenden Merkmale die entsprechenden Ausprägungen haben. Ist beispielsweise der Sensor ein bildgebender Sensor, wie zum Beispiel eine Kamera, so kann von dem entsprechenden Schritt ein Bild als Soll-Bild aufgenommen werden, wenn in dem entsprechenden Schritt das entsprechende Merkmal oder die entsprechenden Merkmale die entsprechenden Ausprägungen haben. Es wird dann in diesem Soll-Bild jener Bereich des Bildes, in dem das Merkmal zu erkennen ist, der entsprechenden Ausprägung dieses Merkmals zugeordnet.

Werden die Schritte durch einen bildgebenden Sensor beobachtet, so kann jeder der Sensoren ein oder mehrere Merkmale des entsprechenden Schrittes erfassen. Es können im erfassten Bild ein oder mehrere Bereiche identifiziert werden, in denen jeweils zumindest ein Merkmal erfasst wird. Vorzugsweise wird für jedes der Merkmale ein eigener Bereich im aufgenommenen Bildsignal abgeteilt. Um die Soll-Bilder Merkmalsausprägungen zuzuordnen, kann nun jeweils ein Bild des entsprechenden Schrittes aufgenommen werden, in dem eine bestimmte Kombination der Merkmalsausprägungen vorliegt. Es kann beispielsweise für jede Merkmalskombination ein entsprechendes Soll-Bild aufgenommen werden, so dass aus einem konkret ermittelten Bild durch Vergleich der Kombination der Merkmalsausprägungen die Ausprägung aller Merkmale ermittelt werden kann. Es ist aber auch möglich, für jede Ausprägung jedes einzelnen Merkmals jeweils ein Soll-Bild aufzunehmen, in dem eine bestimmte Ausprägung dieses Merkmals vorliegt. Beim Vergleich mit den aufgenommenen Bildern der Sensoren wird dann vorzugsweise nur ein Bereich des aufgenommenen Bildes mit einem Bereich des Soll-Bildes verglichen, in dem das entsprechende Merkmal zu erkennen ist. In diesem Fall wird eine Anzahl von Soll-Bildern aufgenommen, die gleich der Gesamtzahl aller möglichen Merkmalsausprägungen aller vom entsprechenden Sensor erfassten Merkmale ist.

In einer vorteilhaften Ausführungsform der Erfindung kann es vorkommen, dass ein Sensorsignal keinem Soll-Sensorsignal des entsprechenden Schrittes zugeordnet werden kann. Es hat in diesem Fall also das beobachtete Merkmal keine Ausprägung, die einer Ausprägung entspräche, für die ein Sollwert oder Soll-Sensorsignal gespeichert ist. In diesem Fall kann vorteilhafterweise das Sensorsignal, beispielsweise also das Bild, einem Benutzer angezeigt werden und die möglichen Ausprägungen des in dem Sensorsignal zu erkennenden Merkmals einem Benutzer zur Auswahl vorgeschlagen werden, so dass der Benutzer eine Ausprägung des Merkmals auswählen kann, welcher das Sensorsignal dann zugeordnet wird. Vorzugsweise kann der Benutzer hier auch eine neue Merkmalsausprägung definieren, z.B. wenn es sich um einen Sonderzustand handelt. Die Darstellung kann beispielsweise auf einem Bildschirm erfolgen.

Es ergeben sich durch dieses Verfahren zunächst Ausprägungen jener Merkmale, die durch die Sensoren in den entsprechenden Schritten beobachtet werden. Erfindungsgemäß werden dann die ermittelten bzw. abgeleiteten Ausprägungen der Merkmale der Schritte zu zumindest einem der Betrachtungszeitpunkte gemeinsam mit vorgegebenen Ausprägungen der entsprechenden Merkmale oder Kombinationen von vorgegebenen Ausprägungen verglichen und es wird aus dem gemeinsamen Vergleich ein Ergebnis der Überwachung abgeleitet. Es werden also zu zumindest einem der Betrachtungszeitpunkte die beobachteten Ausprägungen der Merkmale, vorzugsweise in allen überwachten Schritten, gemeinsam ausgewertet und hieraus das Ergebnis der Überwachung abgeleitet.

Das Ableiten des Ergebnisses aus den Ausprägungen der Merkmale kann erfindungsgemäß mittels einer Regelbibliothek erfolgen, in welcher die in Frage kommenden Kombinationen der Ausprägungen der Merkmale aller in der Überwachung berücksichtigten Schritte einerseits mit entsprechenden Ergebnissen andererseits verknüpft sind. Auf diese Weise kann einer ermittelten Kombination von Merkmalsausprägungen direkt ein Überwachungsergebnis zugeordnet werden.

Vorteilhaft ist es möglich, die Ausprägungen der Merkmale zu mehreren oder einer Vielzahl von Betrachtungszeitpunkten auszuwerten und gemeinsam mit entsprechenden vorgegebenen Ausprägungen zu vergleichen. Es ist insbesondere auch möglich, Merkmalsausprägungen zu mehreren Betrachtungszeitpunkten zunächst miteinander zu verarbeiten und das Ergebnis dieser Verarbeitung mit entsprechenden vorgegebenen Ausprägungen zu vergleichen, um das Ergebnis der Überwachung abzuleiten. Beispielsweise kann der Durchschnitt aus mehreren Merkmalsausprägungen des gleichen Merkmals zu unterschiedlichen Betrachtungszeitpunkten ermittelt werden und dieser Durchschnitt mit der vorgegebenen Ausprägung des entsprechenden Merkmals verglichen werden. Auch andere Vorverarbeitungen mehrerer Merkmalsausprägungen des gleichen Merkmals zu unterschiedlichen Betrachtungszeitpunkten sind möglich.

In einer erfindungsgemäßen Ausgestaltung der Erfindung kann das Ergebnis der Überwachung eines oder mehrere der folgenden Ergebnisse umfassen. Zum einen kann das Ergebnis eine Taktabstimmung des Prozesses sein. Das Ergebnis kann auch angeben, ob und/oder inwieweit die Schritte eines gegebenen Ablaufs synchron zueinander sind. Ein weiteres mögliches Ergebnis kann die Auslastung eines oder mehrerer der Schritte sein.

Weitere mögliche Ergebnisse können ein leerer Werkstückträger, Geschwindigkeitsverlust, eine statistische Durchlaufzeit eines gegebenen Objektes durch einen Ablauf, eine Fehlerkette zwischen einem Fehlerverursacher und einem Fehlerentdecker, eine priorisierte Reihenfolge für unterstützende Maßnahmen an verteilten Orten, ein geteilter Ressourcenbedarf und/oder eine Prognose über eine zu teilende unteilbare oder teilbare Ressource sein.

In vorteilhaften Ausgestaltungen der Erfindung können die genannten Merkmale eines oder mehrere der folgenden Merkmale umfassen, wobei hier die generischen Merkmale genannt werden, die jeweils mehrere Ausprägungen haben können. Merkmale können z.B. sein:
Das Vorhandensein eines Bauteils in einer Auslieferposition. Mögliche Ausprägungen dieses Merkmals können z.B. sein "Bauteil vorhanden", "Bauteil nicht vorhanden" und/oder "unbekanntes Bauteil vorhanden".

Weitere Merkmale können das Vorhandensein eines Bauteils in einer Bearbeitungsposition und das Vorhandensein eines Bauteils in einer Anlieferungsposition sein, die entsprechende Ausprägungen wie das Merkmal "Vorhandensein eines Bauteils in einer Auslieferposition" haben können.

Ein weiteres Merkmal kann die Korrektheit eines in der Bearbeitungsposition vorhandenen Bauteils sein. Dieses Merkmal kann beispielsweise die Ausprägungen "leerer Werkstückträger vorhanden", "nach Arbeitsdurchschleusung vorhanden", "falsche Variante vorhanden" und/oder "Ausschussprodukt vorhanden" haben.

Ein weiteres mögliches Merkmal ist ein Zustand zumindest eines Betriebsmittels und/oder Mitarbeiters zu Prozessbeginn. Mögliche Ausprägungen dieses Merkmals können beispielsweise sein "Zustand zu Prozessbeginn ist ein Soll-Zustand" und "unbekannter Zustand zu Prozessbeginn". Entsprechend kann ein Merkmal ein Zustand zumindest eines Betriebsmittels und/oder Mitarbeiters zum Prozessende sein mit beispielsweise den Ausprägungen "bekannter Zustand zu Prozessende" und/oder "unbekannter Zustand zu Prozessende".

Darüber hinaus kann ein Merkmal ein Wartezustand eines Betriebsmittels und/oder Mitarbeiters sein. Mögliche Ausprägungen dieses Merkmals können beispielsweise sein "Mitarbeiter/Betriebsmittel verharrt in Warteposition", "es liegt kein Warten vor" und/oder "Mitarbeiter/Betriebsmittel führt eine Nebentätigkeit aus".

Ein weiteres mögliches Merkmal kann die Betriebsbereitschaft zumindest eines Betriebsmittels sein. Dieses Merkmal kann beispielsweise die Ausprägungen "Betriebsmittel betriebsbereit", "Betriebsmittel nicht betriebsbereit" und/oder "spezieller betriebsbereiter Zustand" haben.

Ein Merkmal kann auch die Anwesenheit eines Mitarbeiters in einer Arbeitsposition sein. Das Merkmal kann beispielsweise die Ausprägungen "Mitarbeiter in speziellem Zustand", "Mitarbeiter arbeitsbereit" und/oder "Mitarbeiter nicht arbeitsbereit" annehmen.

Ein weiteres mögliches Merkmal ist ein manuelles Eingreifen in den Prozess. Dieses Merkmal kann beispielsweise die Ausprägungen "manueller Prozesseingriff erfolgt" und "kein manueller Prozesseingriff erfolgt" annehmen.

Darüber hinaus kann ein Merkmal ein Agieren eines Betriebsmittels und/oder Mitarbeiters in einem gesperrten Bereich sein. Mögliche Ausprägungen dieses Merkmals können beispielsweise sein "Betriebsmittel/Mitarbeiter agiert über Ausschusskiste", "Betriebsmittel/Mitarbeiter agiert nicht in gesperrtem Bereich", "Betriebsmittel/Mitarbeiter agiert in einem speziellen Bereich" und/oder "Betriebsmittel/Mitarbeiter agiert über Nacharbeitsablage".

Ein Merkmal kann auch eine Identifizierung eines im entsprechenden Schritt bearbeiteten Objektes sein. Die Merkmalsausprägung kann dann die Identität des Objektes sein, wobei vorzugsweise eine begrenzte Menge an möglichen Identitäten vorliegt oder vorgegeben ist. Die Identifizierung kann dabei vorteilhaft anhand einer maschinenlesbaren Kennzeichnung, beispielsweise einer numerischen oder alphanumerischen Kennzeichnung oder eines Bar-Codes, erfolgen.

Auch eine Anwesenheit eines Objektes mit vorgegebenen Eigenschaften kann ein Merkmal sein mit beispielsweise den Ausprägungen "das Objekt mit den vorgegebenen Eigenschaften ist anwesend" und/oder "das Objekt mit den vorgegebenen Eigenschaften ist nicht anwesend".

Ein weiteres mögliches Merkmal ist die Vollständigkeit von Objekten, die im entsprechenden Schritt vorliegen sollen. Dieses kann beispielsweise den Ausprägungen haben, dass die Objekte vollständig vorliegen oder dass die Objekte nicht vollständig vorliegen.

Auch eine Lage und/oder Orientierung eines im entsprechenden Schritt bearbeiteten Objektes kann ein mögliches Merkmal sein, wobei die Ausprägung dann die konkrete Lage und/oder Orientierung ist, die das Objekt haben kann. Vorteilhafterweise sind hierbei nur eine begrenzte Menge von Lagen und/oder Orientierungen möglich oder vorgegeben.

Ein Merkmal kann darüber hinaus auch die Form und/oder das Maß eines im entsprechenden Schritt bearbeiteten Objektes sein, wobei die entsprechende Form bzw. das entsprechende Maß die Ausprägung dieses Merkmals darstellt.

Entsprechend kann auch die Beschaffenheit zumindest einer Oberfläche eines im entsprechenden Schritt bearbeiteten Objektes ein Merkmal sein, wobei die konkrete Oberflächenbeschaffenheit die Ausprägung des Merkmals sein kann. Vorteilhafterweise kann hierbei eine begrenzte Menge von Oberflächenbeschaffenheiten vorliegen oder vorgegeben sein.

Darüber hinaus können auch Eigenschaften eines Inneren eines im entsprechenden Schritt bearbeiteten Objektes Merkmale sein. Dies ist insbesondere möglich, wenn der Sensor Aufschluss über das Innere des Werkstücks geben kann, wie beispielsweise eine Röntgenvorrichtung oder eine Durchleuchtungsvorrichtung bei transparenten Objekten. Die Ausprägung dieses Merkmals ist dann die konkrete Realisierung der entsprechenden Eigenschaft im Inneren des Objektes.

In einer vorteilhaften Ausgestaltung der Erfindung können die über einen vorgegebenen Zeitraum bzw. über eine Vielzahl von Betrachtungszeitpunkten ermittelten Ergebnisse kategorisiert werden, um hieraus Informationen über den Gesamtablauf abzuleiten. Hierbei kann es sich um die Summe gleicher Merkmalsausprägungen bzw. gleicher hieraus geschlossener Ergebnisse über einen Analysezeitraum handeln. Durch die statistische Auswertung von z.B. Mittelwert, Streuung und Trends der Ergebnisse über die Zeit gesehen können sich weitere Aussagen über kontinuierliche Veränderungen des Systems ergeben.

In einer vorteilhaften Ausgestaltung der Erfindung kann anhand zumindest eines der Ergebnisse der Überwachung zumindest eines der Schritte modifiziert werden, so dass die Merkmalsausprägungen der Merkmale in diesem Schritt einer vorgegebenen Ausprägung entspricht, die für einen gewünschten Zustand des entsprechenden Schrittes steht bzw. einen gewünschten Zustand repräsentiert.

Erfindungsgemäß ist außerdem eine Vorrichtung zur Überwachung eines Fertigungs- und/oder Montageprozesses, mit der vorteilhafterweise ein wie vorstehend beschrieben ausgestaltetes Verfahren ausführbar ist. Wiederum weist auch hier der Fertigungs- und/oder Montageprozess einen Ablauf auf mit zumindest einem vorgelagerten Schritt, einem Hauptschritt und einem nachgelagerten Schritt, für die das bezüglich des Verfahrens Gesagte gilt.

Darüber hinaus weist die erfindungsgemäße Vorrichtung zumindest drei Sensoren auf, die jeweils Sensorsignale erzeugen und mit denen jeweils einer der Schritte des Ablaufs beobachtbar ist. Auch für die Sensoren gilt das betreffend das Verfahren Beschriebene analog. Insbesondere können die Sensoren vorteilhafterweise bilderzeugende Sensoren und besonders bevorzugt Kameras sein.

Die erfindungsgemäße Vorrichtung weist außerdem zumindest eine Synchronisationseinheit auf, mit der die Sensorsignale jeweils eines Ablaufs miteinander synchronisierbar sind, so dass zumindest zu einem Betrachtungszeitpunkt, in zumindest einem Betrachtungszeitintervall oder in zumindest einem Betrachtungstakt zumindest ein Sensorsignal jedes einen der Schritte beobachtenden Sensors vorliegt. Für die Funktion der Synchronisationseinheit kann das bezüglich des Verfahrens Beschriebene analog gelten.

Darüber hinaus weist die erfindungsgemäße Vorrichtung zumindest eine Vergleichseinheit auf, mit der die zumindest einen Sensorsignale jeweils mit entsprechenden Soll-Sensorsignalen vergleichbar sind, wobei die entsprechenden Soll-Sensorsignale zumindest bereichsweise jeweils einer Ausprägung zumindest eines Merkmals jenes Schrittes zugeordnet sind, der durch den das entsprechende Sensorsignal erzeugenden Sensor beobachtet wird.

Die Vorrichtung weist außerdem eine Ergebniseinheit auf, mit der aus dem Vergleich die Ausprägung des zumindest einen Merkmals ableitbar ist, und mit welcher die Ausprägungen der Merkmale der Schritte zu zumindest einem der Betrachtungszeitpunkte gemeinsam mit vorgegebenen Ausprägungen der entsprechenden Merkmale oder Kombinationen von vorgegebenen Ausprägungen vergleichbar sind und mit der aus dem gemeinsamen Vergleich ein Ergebnis der Überwachung ableitbar ist.

Vorteilhafterweise sind die Sensoren ortsfix so installiert, dass keine direkten Vibrationen von den Fertigungs- und/oder Montageprozess durchführenden Maschinen auf den Sensor übertragen werden.

Die Sensoren können beispielsweise mittels Stativen und/oder Steckklemmbefestigungen in einer Position installiert sein, in der sie den entsprechenden Schritt des Prozesses beobachten können.

Die erfindungsgemäße Vorrichtung kann vorteilhafterweise eine Vorverarbeitungseinheit aufweisen, mit der die Sensorsignale vorverarbeitet werden. Ist eine solche Vorverarbeitungseinheit vorgesehen, so sind die vorstehend beschriebenen Sensorsignale vorzugsweise jene Sensorsignale, welche von der Vorverarbeitungseinheit ausgegeben werden, sie sind also vorverarbeitete Sensorsignale. Sind die Sensoren bilderzeugende Sensoren oder Kameras, kann die Vorverarbeitungseinheit, beispielsweise von einem Algorithmenauswahlmodul, Informationen über benötigte Filterkorrekturwerte, eine erforderliche Bildauflösung und/oder Bildwiederholrate erfahren und das von den Sensoren gelieferte Signal anpassen und zur Verarbeitung im erfindungsgemäßen Verfahren weiterleiten. Hierdurch kann die übertragene Datenmenge reduziert werden auf die real benötigten Bildinformationen in einer ausreichenden Datenqualität. Dadurch wird es möglich, eine höhere Anzahl an Sensoren zur multiplen Aufnahme einzusetzen und die Effizienz der Auswertung der erzeugten Daten zu steigern.

Werden die Sensorsignale wie oben beschrieben vorverarbeitet, so können in der Synchronisationseinheit die aufbereiteten Sensorsignale mit den anderen aufbereiteten Signalen der anderen Sensoren zeitlich synchronisiert werden.

Die Übertragung der Sensorsignale zur Synchronisationseinheit kann beispielsweise über eine PC-Schnittstelle kabelgebunden, beispielsweise über Ethernet-Bus oder USB 3.0-Controller erfolgen oder kabellos über mehrere Controller zur kabellosen Datenübertragung (z.B. WiFi-Standard).

Die Reihenfolge der Sensoren, in der mehrere aufeinander abfolgende Prozessschritte beoabachtet werden, kann der Synchronisationseinheit manuell vorgegeben werden oder über ein in jedem Bild automatisch erfasstes spezifisches Einlern-Objekt automatisch zugeordnet werden. Die Erfassungsort-Synchronisation wird dann an die Aufzeichnungseinheit als Sensorreihenfolge übergeben

Die synchronisierten Sensorsignale können in einer Aufzeichnungseinheit gespeichert werden und vorteilhaft über die ausgewertete Sensorreihenfolge in Form einer konkreten Signalreihenfolge aufgezeichnet werden. Der synchronisierte Videostream, der für jeden Sensor eine Abfolge von Bildern enthält, kann weiter komprimiert werden, um die Datenübertragung und Datenspeicherung effizienter zu gestalten. Vorteilhafterweise kann also die Sensorsynchronisationseinheit ein zeitlich synchrones und nach Erfassungsorten sortiertes optisches Signal liefern.

Die erfindungsgemäße Vorrichtung kann in einer vorteilhaften Ausgestaltung ein Installations-Interface aufweisen, das eine Benutzer-Schnittstelle sein kann, über welche das System installiert werden kann. Hierbei kann ein Benutzer des Systems, der nicht notwendigerweise der spätere Bediener sein muss, über eine, vorzugsweise grafisch aufbereitete, Benutzer-Schnittstelle Kontextinformationen, beispielsweise mit Hilfe einer Eingabemaske und eines Vorschlagmodus zu präsentierten Videostandbildern, eingeben. Die Kontextinformationen in Bezug auf die optischen Bilddaten des konkreten Anwendungsfalls können sich dabei u.a. auf folgende Punkte beziehen: Verknüpfungsinformation: Hierbei ordnet der installierende Benutzer den (generischen) Merkmalen und/oder den möglichen Ausprägungen der Merkmale, wie z.B. "Werkstückträger vorhanden", ein konkretes Sensorsignal bzw. Bild des entsprechenden Sensors zu.

Der installierende Benutzer kann vorzugsweise außerdem eine Toleranz eines verwendeten Algorithmus einstellen. Hierbei kann der installierende Benutzer eine Einschätzung über die Fehlertoleranz der zu suchenden Merkmalsausprägung einstellen, also vorgeben, ob im Zweifel die Zuordnung zu einer bestimmten Kategorie stattfinden soll, oder ob nur mit sehr hoher Sicherheit erkennbare Ausprägungen dem entsprechenden Sensorsignal zugeordnet werden sollen. Wird keine spezifische Kritikalität festgelegt, so kann eine Standard-Toleranz für jedes der Merkmale verwendet werden.

Über ein spezifisches Anwendungsziel kann der installierende Benutzer zu verwendende Regeln auswählen. Hierüber können sich die Anzahl nötiger Zustände und Regeln, die im Anschluss Anwendung finden, definieren.

In einer vorteilhaften Ausgestaltung der Erfindung kann die Vorrichtung eine Einlerneinrichtung (auch Teach-Modus genannt) aufweisen. Die Einlerneinrichtung kann die für die vorliegende Anwendung nötigen Merkmale mit den aufgenommenen und synchronisierten Sensordaten abgleichen. Sind die Sensordaten Bilddaten, kann hierbei ein das System installierender Benutzer generische Merkmale und die zugehörigen Ausprägungen Bereichen des Bildsignals zuordnen. Vorteilhafterweise bekommt er die zu definierenden Merkmalsausprägungen vorgeschlagen. Er kann dann vorgeben, welches Sensorsignal einer zu definierenden Merkmalsausprägung als Soll-Sensorsignal zuzuordnen ist. Vorteilhafterweise wird dies für alle Merkmalsausprägungen aller Merkmale in allen durch Sensoren beobachteten Schritten vorgenommen. Es ist insbesondere auch möglich, das System überzubestimmen, also einer Merkmalsausprägung mehrere Bildausschnitte verschiedener Bilder zuzuordnen. Hierdurch wird die korrekte Erkennung einer Merkmalsausprägung über akzeptierte leichte Variationen des Soll-Bilds hinweg robuster.

In einer vorteilhaften Ausgestaltung kann die erfindungsgemäße Vorrichtung außerdem eine Konfigurationseinheit einer Auswertungslogik aufweisen. Diese kann zusätzlich über einen oder mehrere Auswahlschritte der Zeit- und Rechenleistungseffizienten Anwendung des erfindungsgemäßen Verfahrens dienen. Basis kann ein abstrakter Einzelmerkmalskatalog sein, der Merkmale, wie beispielsweise "Werkstückträger in Anlieferungsposition", einer abgeschlossenen Menge an möglichen Ausprägungen zuordnet, also im genannten Beispiel beispielsweise "Bauteil vorhanden", "Bauteil nicht vorhanden", "unbekanntes Bauteil vorhanden". Die generischen Merkmale können in Form von Regeln miteinander verknüpft werden. Dabei kann die Verknüpfung die zeitliche Synchronität der Aufnahmen an verteilten, aber miteinander fest verketteten Wirkorten ausnutzen und das Zusammenspiel aus verschiedenen Merkmalen an verschiedenen Orten als Regelergebnis definieren. Dieses Regelergebnis kann dann an eine Schnittstelle kommuniziert werden.

Die erfindungsgemäße Vorrichtung kann außerdem eine automatische Auswertungseinrichtung aufweisen, die die auswertbaren Merkmale aus der Einlerneinrichtung mit dem synchronen und nach Erfassungsorten sortierten Sensorsignal oder optischen Signal der Sensorsynchronisationseinrichtung kombiniert. Hierbei können echtzeitnah bei einer betriebsparallelen Auswertung die Merkmalsausprägungen mit den vorliegenden Bildinformationen abgeglichen werden oder bei aufgezeichneten Signalen über einen Auswertungszeitraum kumuliert nach diesen Merkmalen gesucht werden.

Gefundene Merkmale können vorteilhaft in einem Merkmalsspeicher mit einem vollständigen Satz an Merkmalseigenschaften (wie beispielsweise Erscheinungsort, Zeitpunkt, Dauer, Merkmal und eingetroffene Ausprägung) abgelegt werden. Die Kombinatorik der Merkmalsausprägung kann über eine ausgewählte Regel direkt eine Ergebniszuordnung zulassen oder es kann ein unbekannter Systemzustand auftreten, der sich beispielsweise aufgrund eines fehlenden Merkmals in einer verknüpften Merkmalskette oder aufgrund einer überschrittenen Fehlertoleranz nicht mit einer gewissen Sicherheit einordnen lässt. Dieser unbekannte Systemzustand kann vorteilhaft mit den bisher bereits gesammelten Informationen, wie beispielsweise der Videosequenz rund um den unbekannten Zustand oder den sicher erkannten Merkmalsausprägungen, in zeitsynchronen weiteren Bildsensordaten zusammen mit einem Vorschlag über naheliegende Zustände im Aufbereiter für ein Schnittstellenmodul zusammengestellt werden.

Bei einer direkten Ergebniszuordnung durch einen explizit regelkonformen Zustand der Merkmalsausprägungen werden vorteilhafterweise die hieraus resultierenden Folgen und Maßnahmen in einer Ereignis-Folgenzuordnung für ein Schnittstellenmodul aufbereitet. Ergebnis der automatischen Auswertungseinrichtung können Schlussfolgerungen aus den automatisch wiedergefundenen Merkmalen in den zeitsynchronen Bilddaten sein, die über kombinatorische Regeln entstehen. Diese Schlussfolgerungen können für das Schnittstellenmodul aufbereitet werden.

Die erfindungsgemäße Vorrichtung kann außerdem das genannte Schnittstellenmodul aufweisen, das vorzugsweise den Maschinen- und maschinennahen Regelkreis bei der betriebsparallelen Anwendung der Abhängigkeitsanalyse schließt. Bei der Anwendung der erfindungsgemäßen Vorrichtung als einmaliges Analysewerkzeug kann das Schnittstellenmodul dem Benutzer die im Anwendungsziel definierten Informationen über den Analysezeitraum und kumuliert nach Abschluss des Analysezeitraums automatisch ausgewertet zur Verfügung stellen.

Vorteilhafterweise kann das Schnittstellenmodul eine Bedienerschnittstelle aufweisen, über die ein Bediener nicht automatisch erkannte Merkmalsausprägungen zuordnen kann und die vorzugsweise auch eine Analyse der erhobenen Daten über längere Zeiträume erlaubt.

Vorteilhafterweise kann die erfindungsgemäße Vorrichtung aufgebaut und installiert werden, ohne das zu überwachende Fertigungs- und/oder Montageverfahren zu stören oder zu unterbrechen. Besonders bevorzugt kann die erfindungsgemäße Vorrichtung aufgebaut und installiert werden, ohne in eine Vorrichtung zu Durchführung des Fertigungs- und/oder Montageverfahrens einzugreifen.

Vorteilhafterweise können die Ergebnisse in einem Regelkreis jener den beobachteten Prozess ausführenden Vorrichtung rückgekoppelt werden.

Im Folgenden soll die Erfindung anhand einiger Figuren beispielhaft erläutert werden. Gleiche Bezugszeichen kennzeichnen dabei gleiche oder entsprechende Merkmale. Die in den einzelnen Beispielen beschriebenen Merkmale können auch unabhängig vom konkreten Beispiel realisiert sein und zwischen verschiedenen Beispielen miteinander kombiniert werden.

Es zeigt
- Fig. 1: ein Beispiel einer Abhängigkeitsanalyse unter Verwendung eines erfindungsgemäßen Verfahrens,
- Fig. 2 und 2A - 2G: ein Beispiel einer Ausgestaltung einer erfindungsgemäßen Vorrichtung,
- Fig. 3A - 3C: ein beispielhaftes Vorgehen der Merkmalserkennung,
- Fig. 4A und 4B: ein Beispiel zweier Ausprägungen eines Merkmals,
- Fig. 5A und 5B: zwei beispielhafte Ausprägungen eines generischen Merkmals,
- Fig. 6A und 6B: zwei Ausprägungen eines weiteren Merkmals,
- Fig. 7A und 7B: zwei Ausprägungen eines weiteren Merkmals,
- Fig. 8A und 8B: zwei Ausprägungen eines weiteren Merkmals, das vier mögliche Ausprägungen haben kann,
- Fig. 9: ein Beispiel einer Zuordnung von Merkmalsausprägungen zu einem Ergebnis,
- Fig. 10: ein weiteres Beispiel einer Zuordnung von Merkmalsausprägungen zu einem Ergebnis,
- Fig. 11: ein weiteres Beispiel einer Zuordnung von Merkmalsausprägungen zu einem Ergebnis und
- Fig. 12: ein weiteres Beispiel einer Zuordnung von Merkmalsausprägungen zu einem Ergebnis,
- Fig. 13: eine Aufteilung nach synchron auftretenden Fehlern bei abgestimmten Anlagen und
- Fig. 14: eine Prozessabfolge aufeinander folgender Schritte eines Fertigungs- und/oder Montageverfahrens.

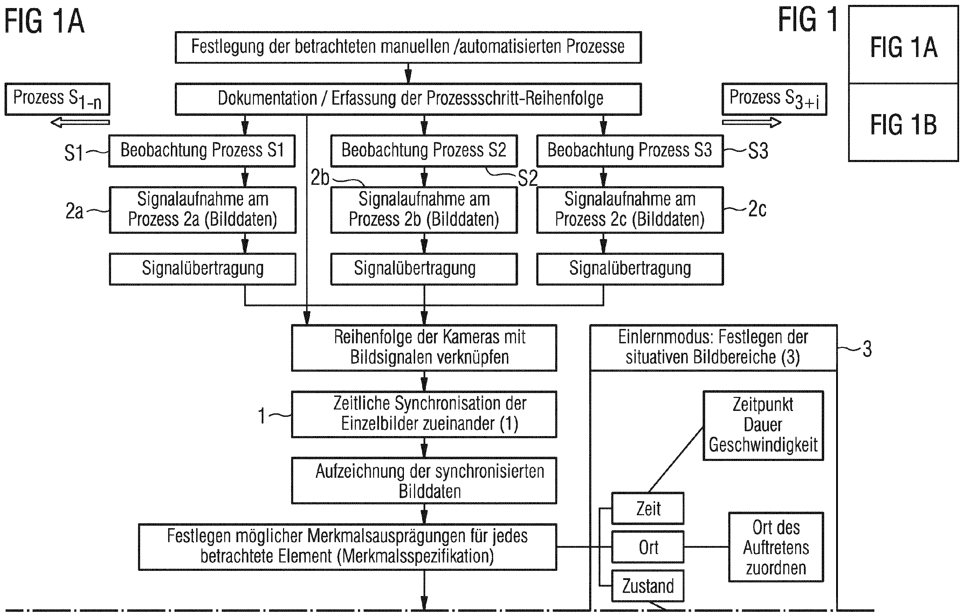

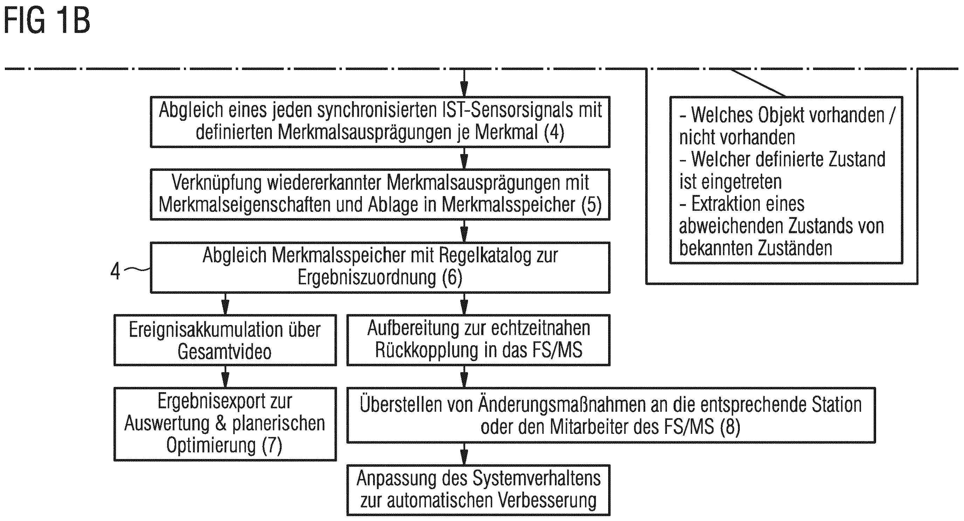

Fig. 1 zeigt beispielhaft eine Abhängigkeitsanalyse unter Verwendung des erfindungsgemäßen Verfahrens. Es wird dabei ein Fertigungs- und/oder Montageprozess überwacht, der zumindest drei Schritte S1, S2 und S3 aufweist, die jeweils mittels eines Sensors beobachtet werden, beispielsweise mittels eines bildgebenden Sensors oder einer Kamera. Es kann dabei der Schritt S1 als vorgelagerter Schritt, der Schritt S2 als Hauptschritt und der Schritt S3 als nachgelagerter Schritt angesehen werden. Die Menge aller beobachteten Schritte S1, S2, S3 wird hier als Ablauf bezeichnet.

Die Schritte S1, S2, S3 werden jeweils mittels eines Sensors beobachtet, es findet also jeweils eine Signalaufnahme 2a, 2b und 2c am entsprechenden Schritt statt. Die aufgenommenen Signale werden zu einer Synchronisationseinheit übertragen, wo die Sensorsignale jeweils eines Ablaufs miteinander synchronisiert werden, so dass zu zumindest einem Betrachtungszeitpunkt zumindest ein Sensorsignal jedes durch einen der Sensoren beobachteten Schrittes S1, S2, S3 vorliegt.

Die zumindest einen Sensorsignale der beobachteten Schritte S1, S2, S3 werden jeweils mit entsprechenden Soll-Sensorsignalen verglichen, die beispielsweise in einem Einlernmodus (auch Teach-Modus genannt) 3 festgelegt worden sein können. Ergebnis dieses Einlernmodus sind konkrete Merkmalsausprägungen, die mit Soll-Sensorsignalen verknüpft wurden. Dabei sind die entsprechenden Soll-Sensorsignale zumindest bereichsweise jeweils einer Ausprägung zumindest eines Merkmals jenes Schrittes S1, S2, S3 zugeordnet, der durch den das entsprechende Sensorsignal erzeugenden Sensor beobachtet wird.

Aus diesem Vergleich kann die Ausprägung des zumindest einen Merkmals für neue Sensorsequenzen abgeleitet werden (4). Diese selbstständig wiedererkannten Ausprägungen werden zusammen mit ihren Eigenschaften wie z.B. Sensorort, bzw. Sensornummer, Zeitpunkt und Dauer der anhaltenden Ausprägung sowie dem zugehörigen generischen Merkmal zu der Ausprägung in einem Merkmalsspeicher abgelegt (5). Aus diesem Merkmalsspeicher heraus werden dann die Ausprägungen der Merkmale mehrerer Schritte zusammen mit ihren Eigenschaften zu zumindest einem der Betrachtungszeitpunkte in Schritt 6 gemeinsam mit weiteren Ausprägungen der entsprechenden Merkmale mit bestimmten Ausprägungen verglichen und aus dem gemeinsamen Vergleich einzelner Merkmale oder der Kombinatorik mehrerer synchroner bzw. spezifisch asynchroner Merkmale ein Ergebnis der Überwachung abgeleitet. Dieses Ergebnis kann über einen gesamten Überwachungszeitraum kumuliert werden und so statistisch ausgewertet werden (7) oder echtzeitnah in das Fertigungs- und/oder Montagesystem zurückgekoppelt werden, um so einen Soll-Zustand anzunehmen (8).

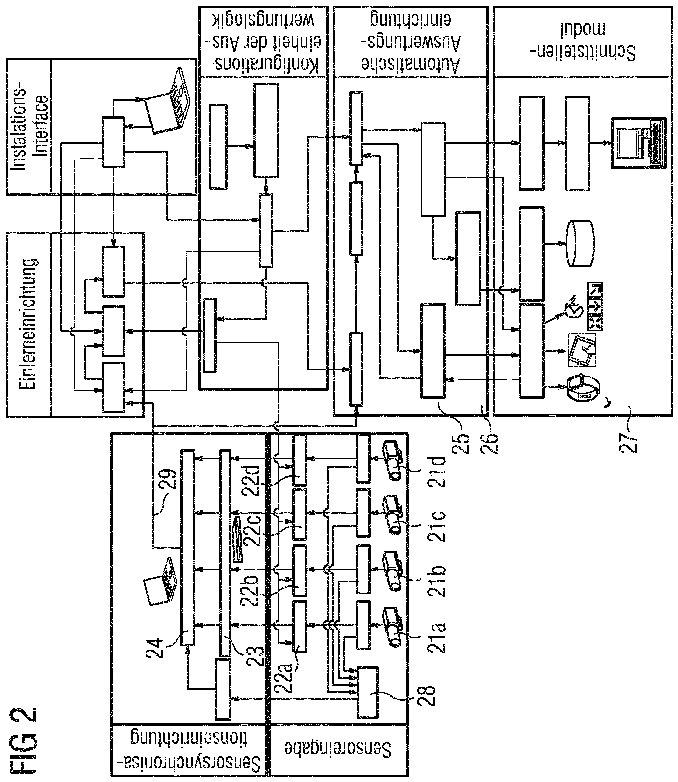

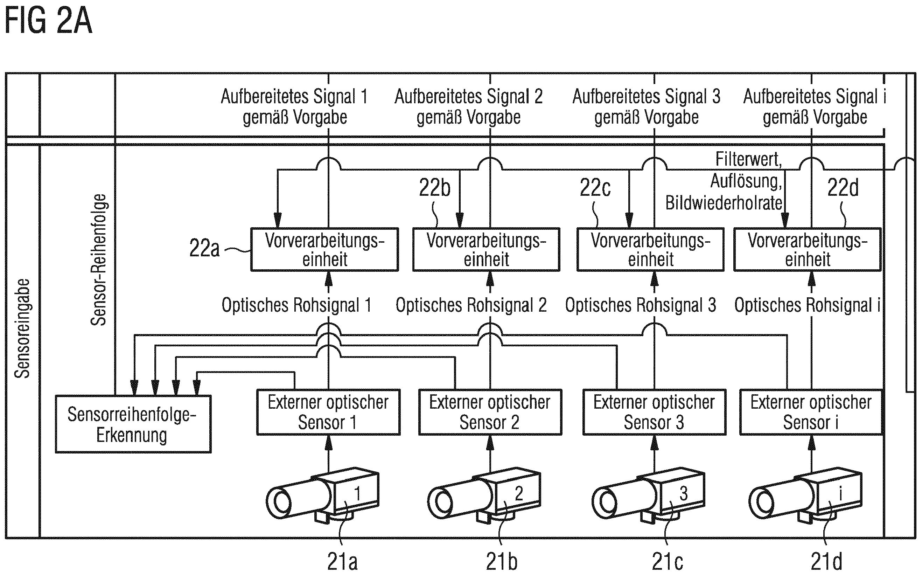

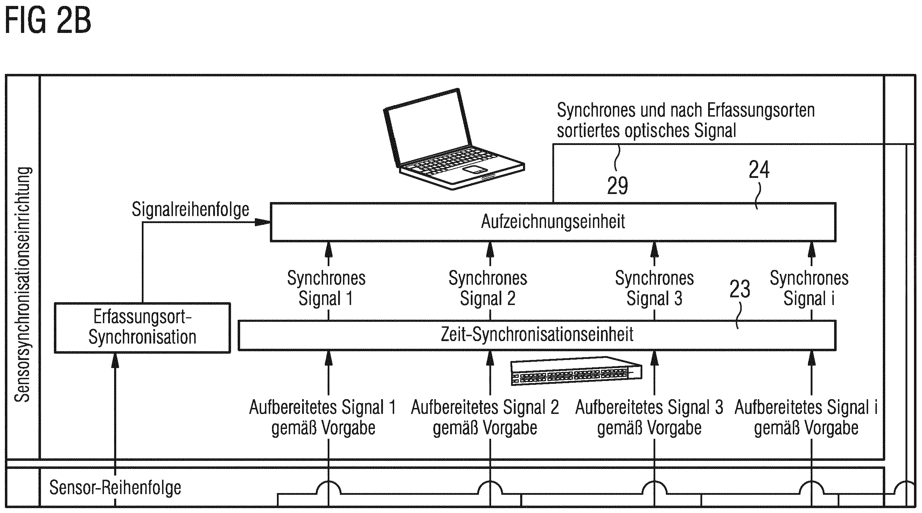

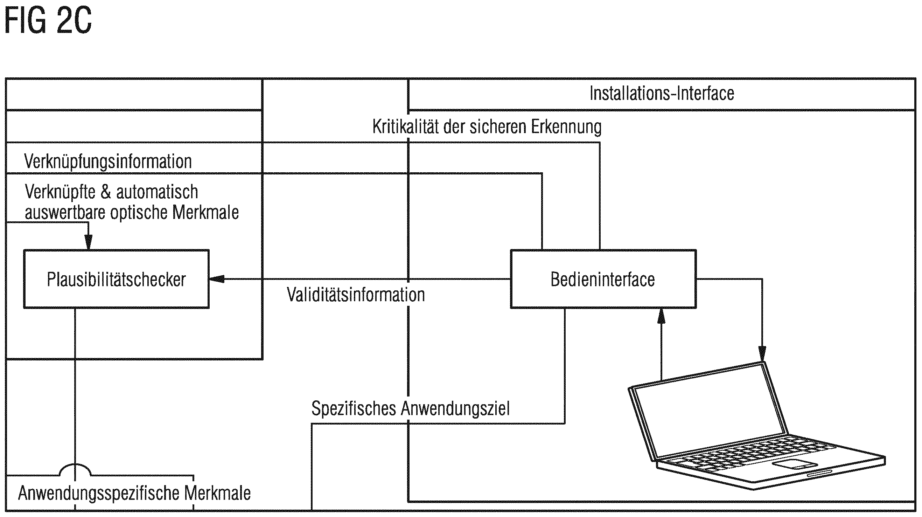

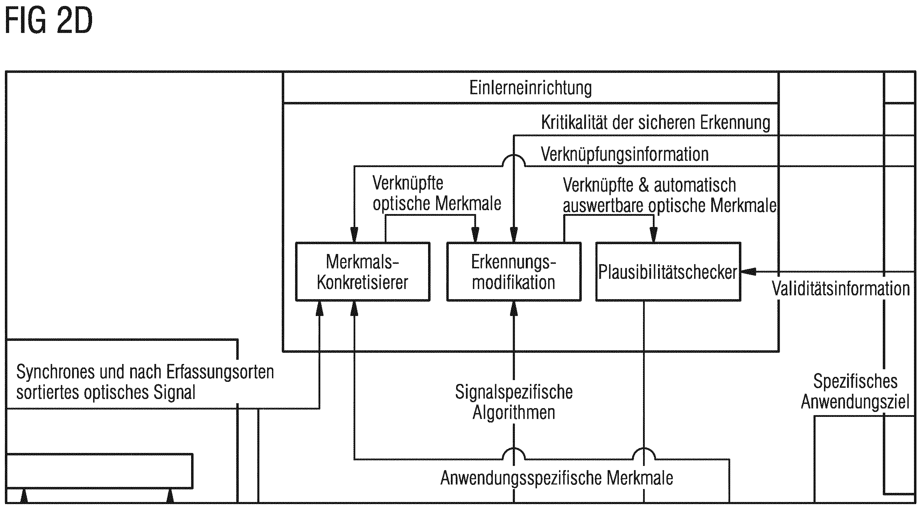

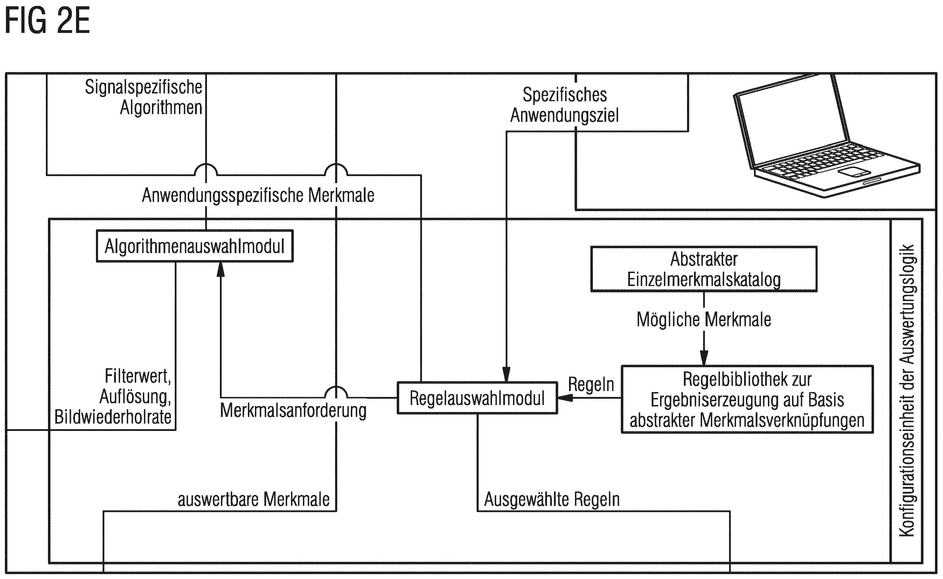

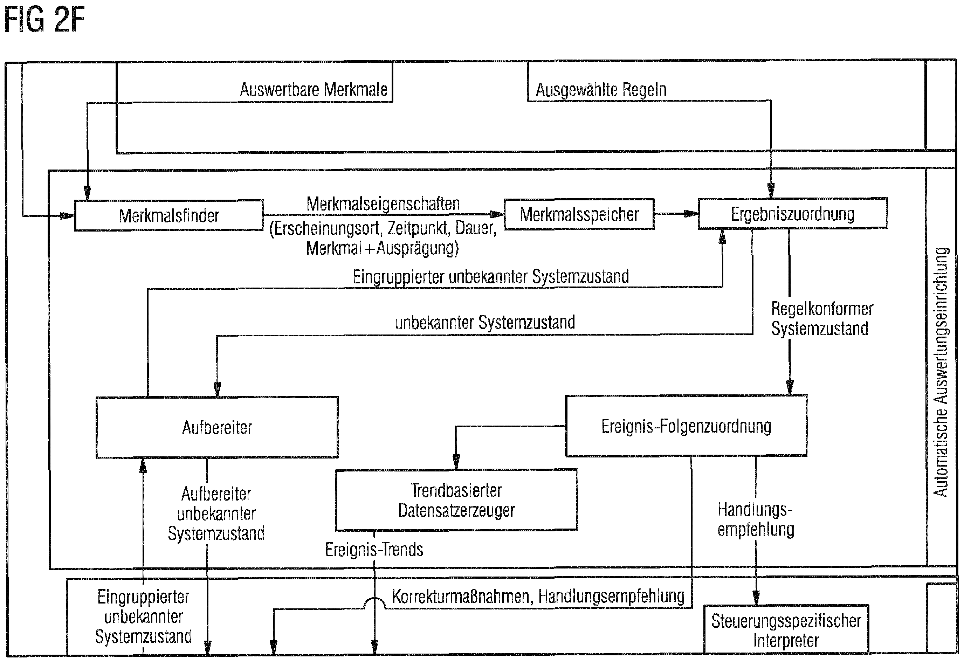

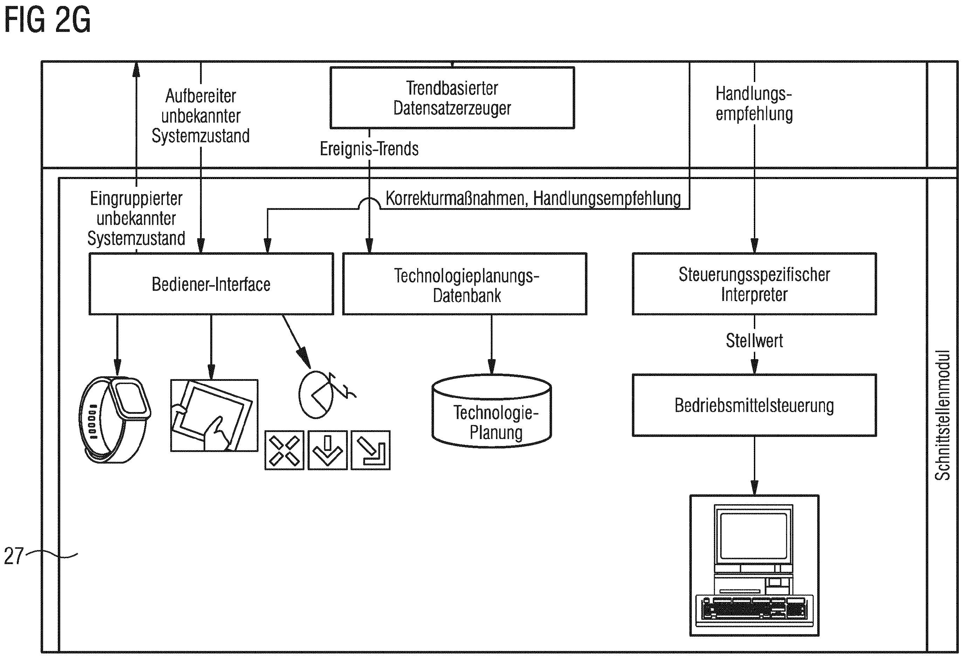

Fig. 2 zeigt ein Beispiel einer erfindungsgemäßen Vorrichtung zur Durchführung des erfindungsgemäßen Verfahrens. Anhand dieser Figur ist auch das erfindungsgemäße Verfahren zu erkennen. Die beispielhaft gezeigte Vorrichtung dient der Überwachung eines Fertigungs- und/oder Montageprozesses, in welchem ein Ablauf zumindest einen vorgelagerten Schritt, einen Hauptschritt und einen nachgelagerten Schritt aufweist.

Die Vorrichtung weist im gezeigten Beispiel vier Sensorsignale erzeugende Sensoren 21a, 21b, 21c und 21d auf. Die Sensorreihenfolgeerkennung 28 erkennt die Abfolge der beobachteten Prozesse anhand eines Beispielbauteils, das durch die jeweiligen Sensoren wahrgenommen wird und erstellt hieraus eine Sensorreihenfolge. Die Sensoren sind im gezeigten Beispiel Kameras. Die Signale der Sensoren 21a, 21b, 21c und 21d werden jeweils mittels einer Vorverarbeitungseinheit 22a, 22b, 22c und 22d vorverarbeitet und dann an eine Synchronisationseinheit 23 weitergeleitet, mit der die Sensorsignale jeweils eines Ablaufs miteinander synchronisierbar sind, so dass zu zumindest einem Betrachtungszeitpunkt zumindest ein Sensorsignal jedes durch einen der Sensoren 21a, 21b, 21c, 21d beobachteten Schrittes vorliegt. Die zueinander synchronisierten Bilder werden im gezeigten Beispiel in einer Aufzeichnungseinheit 24 aufgezeichnet. Die synchronisierten Signale werden dann einer Vergleichseinheit 25, hier als automatische Auswertungseinrichtung 25 bezeichnet, zugeführt, mit der die zumindest einen Sensorsignale der beobachteten Schritte jeweils mit entsprechenden Sollwerten und/oder Soll-Sensorsignalen vergleichbar sind. Dabei sind die entsprechenden Sollwerte und/oder Soll-Sensorsignale zumindest bereichsweise jeweils eine Ausprägung zumindest eines Merkmals jenes Schrittes zugeordnet, der durch den das entsprechende Sensorsignal erzeugenden Sensor 21a, 21b, 21c und 21d beobachtet wird. Im gezeigten Beispiel agiert die automatische Auswertungseinrichtung 25 auch als Ergebniseinheit 26, mit der aus dem Vergleich der Sensorsingale die Ausprägungen des zumindest einen Merkmals ableitbar ist, und mit der die Ausprägungen der Merkmale der Schritte zu zumindest einem der Betrachtungszeitpunkte gemeinsam mit vorgegebenen Ausprägungen der entsprechenden Merkmale vergleichbar sind und aus dem gemeinsamen Vergleich ein Ergebnis der Überwachung ableitbar ist.

Die in Fig. 2 gezeigte Vorrichtung weist außerdem ein Schnittstellenmodul 27 auf, über welches die erlangten Ergebnisse der Überwachung an einen Benutzer ausgebbar sind. Das Schnittstellenmodul 27 ermöglicht außerdem die Aufzeichnung von Ergebnissen in einer Technologieplanungs-Datenbank und die Entgegennahme von Handlungsempfehlungen aus der automatischen Auswertungseinrichtung, um Betriebsmittel, einer zur Durchführung des überwachten Prozesses verwendeten Maschine, ereignisbezogen zu steuern.

Die Fig. 2A, 2B, 2C, 2D, 2E, 2F und 2G zeigen Ausschnitte des in Fig. 2 gezeigten Systems.

Fig. 2A zeigt die in Fig. 2 gezeigte Sensoreingabe. Die Sensoreingabe bildet in diesem Beispiel die Basis des Gesamtsystems. Hierbei werden eine bestimmte Anzahl an optischen Sensoren 21a, 21b, 21c, 21d, im weiteren Text Kameras genannt, (mindestens jedoch drei Stück) so positioniert, dass sie den Kerninhalt des jeweiligen Arbeitsschritts gut beobachten können. Ist dies aus einer Perspektive aufgrund von Abschattungen nicht möglich, können auch mehrere Kameras zur Beobachtung des gleichen Prozesses eingesetzt werden. Die Kameras wurden vorzugsweise so aufgestellt dass der Standpunkt ortsfix ist und keine direkten Maschinenvibrationen auf die Kamera übertragen werden. Sich wandelnde Lichtverhältnisse stellen wiederum kein Problem dar, ebenso kann durch eine Scheibe hindurch ein Prozess beobachtet werden, so dass keine direkte Installation in einer Maschine nötig ist. Zum Einsatz kommen hierbei typischerweise Stative und Steckklemmenbefestigungen.

Der apparative Aufbau und somit die Reihenfolge, in der die Kameras 21a, 21b, 21c, 21d einen ablaufenden Prozess beobachten, bzw. die Information, welche Kameras 21a, 21b, 21c, 21d denselben Prozess beobachten, kann entweder manuell in die Sensorreihenfolge-Erkennung eingegeben oder durch den Einsatz eines gekennzeichneten Test-Werkstücks, welches alle relevanten Prozesse in der richtigen Reihenfolge regulär durchläuft, automatisch erfasst werden.

Jede Kamera 21a, 21b, 21c, 21d besitzt im gezeigten Beispiel eine Vorverarbeitungseinheit 22a, 22b, 22c, 22d, die vom Algorithmenauswahlmodul Informationen über die im Anwendungsfall benötigten Filterkorrekturwerte, nötige Bildauflösung und Bildwiederholrate erfahren kann und somit das optische Rohsignal angepasst an die vorliegende Aufgabenstellung weiterleiten kann. Dies dient einer sinnvollen Reduzierung der übertragenen Datenmengen auf die real benötigten Bildinformationen in einer fallspezifisch ausreichenden Datenqualität. Diese Vorverschlankung der Datenmenge auf ein sinnvolles Maß ermöglicht das Einbinden einer wesentlich höheren Anzahl an optischen Sensoren zur multiplen Aufnahme und steigert zudem die effiziente Auswertung dieser Daten.

Fig. 2B zeigt die in Fig. 2 gezeigte Sensorsynchronisationseinheit. Die vorzugsweise aufbereiteten Sensorsignale werden in einer Synchronisationseinheit 23 mit den anderen aufbereiteten Signalen aller weiteren Kameras 21a, 21b, 21c, 21c auf Einzelbildbasis zeitlich synchronisiert. Dies kann zum Beispiel über einen externen Trigger erfolgen oder über den Zeitstempel eines jeden Einzelbildes. Die Auswahl basiert auf der Anforderung an die Güte und Bildsynchronität. Die Übertragung der optischen Bilddaten erfolgt hierbei über eine PC-Schnittstelle entweder kabelgebunden (z.B. Ethernet-Bus oder USB 3.0-Controller) oder kabellos über mehrere Controller zur kabellosen Datenübertragung (z.B. WiFi-Standards). Anschließend werden die synchronen Signale in die Aufzeichnungseinheit 24 eingespielt und über die ausgewertete Sensorreihenfolge in Form einer konkreten Signalreihenfolge aufgezeichnet. Der synchronisierte Videostream wird hier weiter komprimiert, um die Datenübertragung und Datenspeicherung effizienter zu gestalten. Ergebnis der Sensorsynchronisationseinrichtung ist somit ein zeitlich synchrones und nach Erfassungsorten sortiertes optisches Signal 29, welches der Einlerneinrichtung und der automatischen Auswertungseinrichtung zur Verfügung gestellt wird.

Fig. 2C zeigt das in Fig. 2 gezeigte Installations-Interface. Das Installations-Interface ist klar vom Bediener-Interface, welches ein Teil des Schnittstellenmoduls ist, zu unterscheiden. Beim Installations-Interface handelt es sich im Gegensatz zum Schnittstellenmodul um eine einmal pro Anwendungsfall verwendete Benutzer-Schnittstelle, deren Anwendungszeitpunkt vor dem Betrieb der gesamten Abhängigkeitsanalyse liegt. Hierbei gibt der Einrichter des Systems (nicht zwangsläufig der spätere Bediener) über ein grafisch aufbereitetes User-Interface Kontextinformationen mit Hilfe einer Eingabemaske und eines Vorschlagsmodus zu präsentierten Videostandbildern ein. Diese Kontextinformationen in Bezug auf die optischen Bilddaten des konkreten Anwendungsfalls können sich auf folgende Punkte beziehen:
Verknüpfungsinformationen: Hierbei ordnet der Einrichter den generischen Merkmalen und den möglichen Ausprägungen, wie z.B. "Werkstückträger vorhanden", ein konkretes Bild des spezifischen Einzelsignals eines optischen Sensors zu.

Kritikalität der sicheren Erkennung bezieht sich auf die einstellbare Toleranz des verwendeten Algorithmus. Hierbei gibt der Einrichter eine Einschätzung über die Fehlertoleranz des zu suchenden Zustands ab, d.h. er beurteilt, ob im Zweifel die Zuordnung zu einer bestimmten Merkmalsausprägung stattfinden soll oder lieber nur mit sehr hoher Sicherheit IST-Sensorsignale der entsprechenden Merkmalsausprägung zugeordnet werden sollen. Diese Entscheidung hängt sehr vom vorliegenden Anwendungsfall ab. Falls keine spezifische Kritikalität festgelegt wird, wird eine Standard-Toleranz für das Merkmal verwendet.

Über das spezifische Anwendungsziel kann der Einrichter zu verwendende Regeln auswählen. Hierüber definieren sich die Anzahl nötiger Merkmalsausprägungen, die konkreten IST-Sensorsignalen zugeordnet werden müssen und Regeln, die im Anschluss Anwendung finden.

Fig. 2D zeigt die in Fig. 2 gezeigte Einlerneinrichtung. Die Einlerneinrichtung (auch Teach-Modul genannt) ist im gezeigten Beispiel das zentrale Bindeglied zwischen der apparativen Vorrichtung zur Erfassung der benötigten zeitsynchronen Sensordaten der verschiedenen Wirkorte und der automatischen Konfigurations- und Auswertungseinheit, die das Kernstück des neuen Verfahrens darstellt.

Die Einlerneinrichtung gleicht hier im Merkmals-Konkretisierer die für die vorliegende Anwendung nötigen Merkmale mit dem aufgenommenen synchronisierten Videostream ab. Hierbei definiert der Einrichter im Installations-Interface Bildbereich und Merkmalstypen und bekommt anschließend die zu definierenden Merkmalsausprägungen vorgeschlagen und hat zusätzlich die Möglichkeit spezielle Merkmalsausprägungen anzulegen. In einem Zeitraffermodus kann er nun sagen, welche Szene welcher Merkmalsausprägung entspricht. Dies kann für alle Merkmale in allen Schritten erfolgen, wobei das System auch überbestimmt werden kann, einer Merkmalsausprägung also mehrere Bilder zugeordnet werden können. Hierdurch wird die korrekte Erkennung einer Ausprägung über leichte Variationen hinweg robuster.

Das Modul zur Erkennungsmodifikation, nachgeschaltet den konkreten Zuordnung der Bildinformationen, kann jede Merkmalsinformation und die zugehörige automatische Algorithmenauswahl um eine benutzerspezifische Toleranzschwelle anreichern. Im Plausibilitätschecker wird nun diese Verknüpfung mittels des zugewiesenen Algorithmus einmal oder auf Wunsch des Einrichters auch öfter ausgeführt, und so eine Merkmalszuordnung dem Einrichter präsentiert, die nicht der Stelle des Videos entspricht, die der Einrichter zum Klassifizieren der Merkmalsausprägungen verwendet hat. Nun kann der Einrichter die automatische Zuordnung der präsentierten Videoszene zu einem Merkmal mit einer konkreten Merkmalsausprägung (Zustand) als korrekt bestätigen oder diese als falsch einstufen und den Merkmalskonkretisierer erneut auf dieses Merkmal anwenden.

Das Ergebnis der Einlerneinrichtung nach einem einwandfreien Durchlauf sind konkret für den vorliegenden Anwendungsfall zugeordnete Merkmale, die dem abstrakten Einzelmerkmalskatalog entstammen.

Fig. 2E zeigt die in Fig. 2 gezeigte Konfigurationseinheit der Auswertungslogik. Die Konfigurationseinheit der Auswertungslogik steuert die Art und den Umfang der Abhängigkeitsanalyse und dient zusätzlich über mehrere Auswahlschritte der zeit- und rechenleistungseffizienten Anwendung des Verfahrens.

Basis ist ein abstrakter Einzelmerkmalskatalog, der, aufweisend mehrere Merkmale, wie z.B. "Werkstückträger in Anlieferungsposition", eine abgeschlossene Menge an möglichen Ausprägungen zuordnet (hier z.B. "Bauteil vorhanden", "Bauteil nicht vorhanden", "unbekanntes Bauteil vorhanden"). Diese generischen Merkmale können in Form von Regeln miteinander verknüpft werden. Die Verknüpfung nutzt die zeitliche Synchronität der Aufnahmen an verteilten, aber miteinander fest verketteten Wirkorten aus und definiert das Zusammenspiel aus verschiedenen Merkmalen an verschiedenen Orten als ein Regelergebnis. Dieses Regelergebnis kann dann an eine Schnittstelle kommuniziert werden.

Ein Beispiel hierfür wäre: Wenn in einem Prozess P2 ein Betriebsmittel bereit ist und in Warteposition verharrt, P3 nachgelagert noch regulär arbeitet, aber ein vorgelagerter Prozess P1 kein Werkstück mehr liefert, dann ist dies dem Ereignis "Linienbeschränkung vorgelagert in P1" zuzuordnen und an das Schnittstellenmodul so zu kommunizieren. Für jedes Regelergebnis kann ebenfalls die hiermit verknüpfte Maßnahme an das Schnittstellenmodul kommuniziert werden.

Im Regelauswahlmodul werden bevorzugt nur die für die Erreichung des spezifischen Anwendungsziels notwendigen Regeln aus dem Regelkatalog ausgewählt und die hierfür notwendigen Merkmale und Merkmalsausprägungen extrahiert. Diese können an das Modul zur Algorithmenauswahl kommuniziert werden, welches für den vorliegenden Anwendungsfall die passenden Algorithmen auswählt. Über den Anwendungsfall und die damit einhergehende Fluss-, Takt- und Entscheidungsgeschwindigkeit definieren sich auch die Stellgrößen für die Vorverarbeitungseinheiten bezüglich nötiger Einzelbildauflösung und Bildwiederholrate. Je nach ausgewähltem Algorithmus kann noch ein Filterwert mit vermittelt werden.

Output der Konfiguration kann somit der auf den Anwendungsfall abgestimmte Merkmals- und Regelsatz sein, der das Auswertungssystem so schlank wie möglich hält, zudem aber alle gewünschten Aussagen über das System erfassbar und auswertbar macht.

Fig. 2F zeigt die in Fig. 2 gezeigte automatische Auswertungseinrichtung. Die automatische Auswertungseinrichtung kombiniert vorzugsweise im Merkmalsfinder die auswertbaren Merkmale aus der Einlerneinrichtung mit dem synchronen und nach Erfassungsorten sortierten optischen Signal der Sensorsynchronisationseinrichtung. Hierbei werden vorzugsweise echtzeitnah bei einer betriebsparallelen Auswertung die Merkmalsausprägungen mit den vorliegenden Bildinformationen abgeglichen oder bei aufgezeichnetem Material über den Auswertungszeitraum kumuliert nach den Merkmalen gesucht.

Gefundene Merkmale können in einem Merkmalsspeicher mit einem vollständigen Satz an Merkmalseigenschaften (Erscheinungsort, Zeitpunkt, Dauer, Merkmal und eingetroffene Ausprägung) abgelegt werden. Entweder die Kombinatorik der Merkmalsausprägung lässt über eine ausgewählte Regel direkt eine Ergebniszuordnung zu oder es tritt ein unbekannter Systemzustand auf, der sich aufgrund eines fehlenden Merkmals in einer verknüpften Merkmalskette, einer nicht passenden Ausprägung in der Merkmalsaupsrägungskette oder aufgrund einer erweiterten Fehlertoleranz nicht mit einer gewissen Sicherheit einordnen lässt. Dieser unbekannte Systemzustand kann mit den bisher bereits gesammelten Informationen, wie z.B. der Videosequenz rund um den unbekannten Zustand, oder den sicher erkannten Merkmalsausprägungen in zeitsynchronen weiteren Bildsensordaten zusammen mit einem Vorschlag über naheliegende Zustände im Aufbereiter für das Schnittstellenmodul zusammengestellt werden.

Bei der direkten Ergebniszuordnung durch einen explizit regelkonformen Systemzustand können die hieraus resultierenden Folgen und Maßnahmen in der Ereignis-Folgenzuordnung für das Schnittstellenmodul aufbereitet werden.

Ergebnis der automatischen Auswertungseinrichtung können Schlussfolgerungen aus den automatisch wiedergefundenen Merkmalen in den zeitsynchronen Bilddaten sein, die über kombinatorische Regeln entstehen. Diese Schlussfolgerungen werden für das Schnittstellenmodul aufbereitet.

Fig. 2F zeigt das in Fig. 2 gezeigte Schnittstellenmodul. Das Schnittstellenmodul kann den Maschinen- und maschinennahen Regelkreis bei der betriebsparallelen Anwendung der Abhängigkeitsanalyse schließen. Bei der Anwendung als einmaliges Analysewerkzeug stellt es dem Interessensträger die im Anwendungsziel definierten Informationen über den Analysezeitraum und kumuliert nach Abschluss des Analysezeitraums automatisch ausgewertet zur Verfügung. Das Schnittstellenmodul kann sich aus den drei folgenden Schnittstellen zusammensetzen.

Die Bedienerschnittstelle bezieht sich einmal auf den Vorschlagmodus der aufbereiteten unbekannten Systemzustände, die der Bediener mittels einer grafischen Oberfläche kategorisiert. Hierbei kann er mit Vorschlägen über die möglichen Merkmalsausprägungen des jeweils unsicheren Merkmals unterstützt werden. Regulär kann der Bediener über die Folgen und hierfür festgelegte Maßnahmen informiert werden. Z.B. können über offene Datenbankstrukturen oder in Java programmierte Apps, Smartwatches und Tablets in Echtzeit mit Informationen versorgt werden. Hierzu zählt z.B. die nach der Kritikalität für die Gesamtanlagenausbringung priorisierte Aufgabenliste für den Bediener. Auch konventionelle Systeme, wie Lichtsignale und Hinweisgeräusche, können über eine solche Schnittstelle angesprochen werden.

Alternativ dazu können bei einer Integration des Analysesystems zur betriebsparallelen Überwachung auch feste Schnittstellen mit der Betriebsmittelsteuerung installiert werden. Hier existieren etablierte Standards mittels OPC-Servern (z.B. OPC UA), die über Internetprotokolle im XML-Format (gemäß MT-Connect) die Kommunikation mit Maschinen ermöglichen. Hierüber können feste Gegenmaßnahmen beim Auftreten bestimmter Ereignisse kommuniziert werden.

Darüber hinaus lassen sich die erhobenen Daten und hieraus abgeleiteten Ergebnisse über längere Zeiträume analysieren, Trends ableiten und in Technologiedatenbanken ablegen. Hier findet ebenfalls eine Verarbeitung mittels Datenbankstrukturen statt.

Als fester Teil der Gesamtarchitektur ist das Ergebnis des Schnittstellenmoduls die Rückkopplung der gewonnenen Erkenntnisse in den Maschinenregelkreis, den maschinennahen Regelkreis in Form des Bedieners und die mittelfristige Verbesserung der Produktivität über eine trendbasierte Technologiedatenbank.

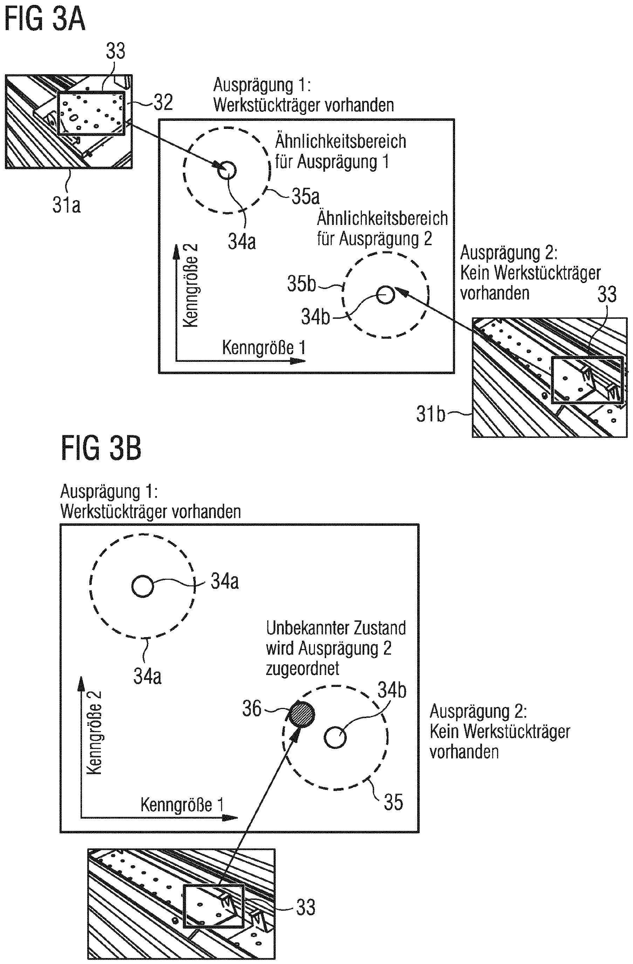

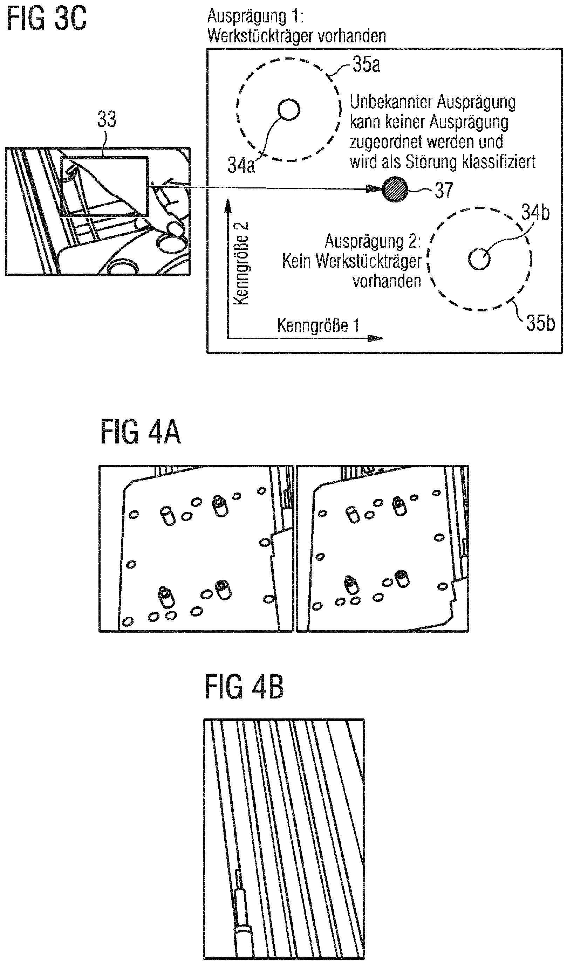

Die Figuren 3A, 3B und 3C zeigen, wie einem bestimmten (generischen) Merkmal die verschiedenen Ausprägungen dieses Merkmals zugeordnet werden können. Durch einen der Sensoren wurde hier ein Sensorsignal 31a und 31b von unterschiedlichen Ausprägungen eines bestimmten Merkmals aufgenommen. Hier betrifft das Merkmal, ob ein Werkstückträger 32 vorhanden ist. Die Sensorsignale 31a und 31b sind im gezeigten Beispiel Bilder eines bestimmten Bereichs der zur Durchführung des zu überwachenden Fertigungs- und/oder Montageprozesses verwendeten Vorrichtung. Die Bilder 31a und 31b bilden dabei den gleichen Ausschnitt ab, wobei jedoch im Bild 31a der Werkstückträger vorhanden ist und im Bild 31b der Werkstückträger nicht vorhanden ist.

Die Ausprägungen können vom Benutzer eingelernt werden. Hierfür sind in einer Ausführungsform Beispielaufnahmen der relevanten Ausprägungen notwendig. Im Prinzip ist eine Aufnahme je Ausprägung ausreichend, bei mehreren Aufnahmen ist jedoch eine größere Prozesssicherheit gegeben. Das Einlernen funktioniert, indem die relevante Ausprägung im Bild mit einem "Fenster" 33 markiert und benannt wird bzw. eine vorgegebene Merkmalsausprägung zugeordnet wird (z.B. "Werkstückträger vorhanden").

Um die Stabilität der Erkennung zu gewährleisten, wird vorzugsweise auch die gegenteilige Ausprägung eingelernt (in diesem Fall: "kein Werkstückträger vorhanden").

Die Auswahl der zu detektierenden Ausprägungen wird bevorzugt für jeden Anwendungsfall definiert. Soll beispielsweise auf einem Werkstückträger ein Werkstück erkannt werden, so kann der Benutzer entweder zwei Ausprägungen definieren ("Werkstück vorhanden", "Werkstück nicht vorhanden") oder drei Ausprägungen (Werkstück vorhanden", "Werkstück nicht vorhanden", "Werkstückträger ohne Werkstück vorhanden"), je nachdem, was für den Prozess relevant ist. Falls das Werkstück noch auf bestimmte Qualitätsmerkmale hin untersucht werden soll, so können diese ebenfalls eingelernt werden, was die Anzahl möglicher Ausprägungen entsprechend erhöht.

Zur Erkennung können von dem markierten Fensterausschnitt 33 optische Kenngrößen ermittelt werden (z.B. Pixelintensitäten wie mittlere Farbwerte oder mittlere Grauwerte, Histogrammverteilung usw.). Mit Hilfe der Kenngrößen können die Zustände "kodiert" werden. Anschließend wird z. B. mit Verfahren des maschinellen Lernens (z.B. neuronale Netze oder nächste Nachbarklassifikation) ein Prognosemodell erstellt, anhand dessen die Ausprägungen prognostiziert werden können. Hierbei wird mit Hilfe des Prognosemodells für jede unbekannte Ausprägung eine "Wahrscheinlichkeit" ermittelt, welcher bekannten Ausprägung diese am ähnlichsten ist. Bei einem automatisch ermittelten Ähnlichkeitsmaß (z.B. mindestens 80%) wird die unbekannte Ausprägung einer bekannten Ausprägung zugeordnet. Weist eine Ausprägung keine Ähnlichkeit zu einer bekannten Ausprägung auf, wird sie als Störung klassifiziert. Unbekannte Ausprägungen können jederzeit vom Nutzer klassifiziert und in das Modell integriert werden.

Fig. 3A zeigt ein Beispiel anhand von zwei Kenngrößen (mittlerer Grauwert und Histogrammintegral). Die Kenngrößen sind hier gegeneinander aufgetragen. Die Figuren zeigen also eine durch die Kenngrößen aufgespannte Ebene.

Für jede der beiden Ausprägungen sind Sollwerte 34a bzw. 34b der Sensorsignale vorgegeben. Darüber hinaus ist jeweils ein Ähnlichkeitsbereich 35a bzw. 35b definiert, innerhalb dessen die Werte der Kenngrößen noch dem Sollwert der entsprechenden Kenngröße entsprechend verstanden werden sollen.

Im gezeigten Beispiel werden die Kenngrößen nur aus dem Bildabschnitt innerhalb des Fensters 33 ermittelt. Die Werte der Kenngrößen 34a und 34b spiegeln hier also das Soll-Sensorsignal wieder.

Fig. 3B zeigt wiederum die in Fig. 3A gezeigte Ebene, die durch die beiden Kenngrößen aufgespannt wird. Es wurde nun aus einem Sensorsignal bei Beobachtung eines Schrittes der Fertigungs- und/oder Montageprozesses ein bestimmtes Wertepaar 36 der Kenngrößen im betrachteten Fenster 33 ermittelt.

Da die Werte der Kenngrößen, die aus dem beobachteten Sensorsignal ermittelt wurden, innerhalb des Toleranzbereiches 35b der zweiten Ausprägung liegen, kann dieses Sensorsignal der 2. Ausprägung "kein Werkstückträger vorhanden" zugeordnet werden.

Fig. 3C zeigt wiederum die aus den Kenngrößen aufgespannte Ebene sowie ein durch Auswertung eines Sensorsignals ermitteltes Wertepaar 37 der Kenngrößen, der in keinem der Toleranzbereiche 35a oder 35b der bekannten Merkmalsausprägungen liegt. In diesem Fall kann das ermittelte Sensorsignal keinem Soll-Sensorsignal zugeordnet werden und damit keiner Ausprägung des entsprechenden Merkmals. In diesem Fall kann das Sensorsignal 38 einem Benutzer zur Zuordnung zu einer Merkmalsausprägung angezeigt werden.

Hinsichtlich der verwendeten optischen Kenngrößen können im Prinzip sämtliche bekannten Algorithmen aus der Bildverarbeitung genutzt werden, lediglich die Konfigurierbarkeit und Bedienerfreundlichkeit ist hier einschränkend (je mehr mögliche Kenngrößen, umso mehr muss unter Umständen konfiguriert werden). Für viele Fälle genügt ein Standardsatz aus 5 bis 10 Grauwert- und Histogrammkenngrößen. Versierte Nutzer können die Kenngrößen auch aufgabenangepasst auswählen. Sollten die Standardkenngrößen nicht ausreichen, so wird anhand statistischer Optimierungsverfahren (z.B. Simplex) die beste Kombination an Kenngrößen ausgewählt. Als Gütekriterium gilt eine möglichst gute Trennbarkeit der Klassen.

Die Wiedererkennung über einen bestimmten Zeitraum hinweg kann wie folgt gewährleistet werden:
Für jede unbekannte Ausprägung kann eine Wahrscheinlichkeit berechnet werden, inwieweit die unbekannte Ausprägung einer der bekannten Ausprägungen zugeordnet werden kann. Durch den Toleranzbereich können so auch ähnliche, aber nicht exakt gleiche Ausprägungen klassifiziert werden. Es sollte darauf geachtet werden, dass die Ausprägungen im Bild unterscheidbar sind und Veränderungen nur in bestimmten Toleranzen möglich sind.

Eine hinreichende Prozessstabilität der Wiedererkennung, technisch umsetzbar über einen entsprechenden Analysezeitraum mit sich ändernden Verhältnissen (Licht, Verschmutzung etc.) kann wie folgt gewährleistet werden:
Die Robustheit bei der Ausprägungserkennung hängt stark vom Prozess und der gewählten Bildaufnahme ab. Werden die Bilder so aufgenommen und die Fenster so gesetzt, dass relevante Merkmale im Bild möglichst dominant sind, so ist der Algorithmus sehr robust gegenüber Störungen. Sollten die Störungen im Bild zu stark dominieren, so werden diese als unbekannt bzw. Störung klassifiziert (z.B. ein eingelernter Werkstückträger ist sauber und metallisch grau, der nächste Werkstückträger ist komplett schwarz aufgrund von Verschmutzungen). In diesem Fall kann die neue Ausprägung nachtrainiert werden (z.B. Ausprägung 1: "Werkstückträger verschmutzt" und Ausprägung 2: "Werkstückträger sauber"). In der Regel können prozessübliche Störungen jedoch bis zu 20% des Fensters einnehmen und werden immer noch richtig klassifiziert.

### Beispiel:

Beide Werkstückträger in Fig. 4A werden Ausprägung 1: "Werkstückträger vorhanden" zugeordnet, da Ausprägung 2, wie in Fig. 4B gezeigt, komplett anders aussieht:
Da die optischen Merkmale und Kenngrößen im Hinblick auf eine optimale Trennbarkeit der Ausprägungen ausgewählt werden, ist das Verfahren sehr robust gegenüber Störungen. Sollte eine zu starke Störung auftreten, so wird diese Ausprägung auch folgerichtig als Störung erkannt, wenn sie keiner bekannten Ausprägung zugeordnet werden kann. Ein Nachtraining ist möglich.

Ein Punkt, der häufig in der Realität auftritt, sind sich verändernde Lichtverhältnisse. Hierfür kann ein Ausgleichsmodul implementiert werden, welches die gesamte Lichtintensität im Bild analysiert und entsprechend normiert. Hiermit können gleichmäßige Beleuchtungsschwankungen erkannt und korrigiert werden, wodurch die Robustheit des Verfahrens weiter gesteigert werden kann.

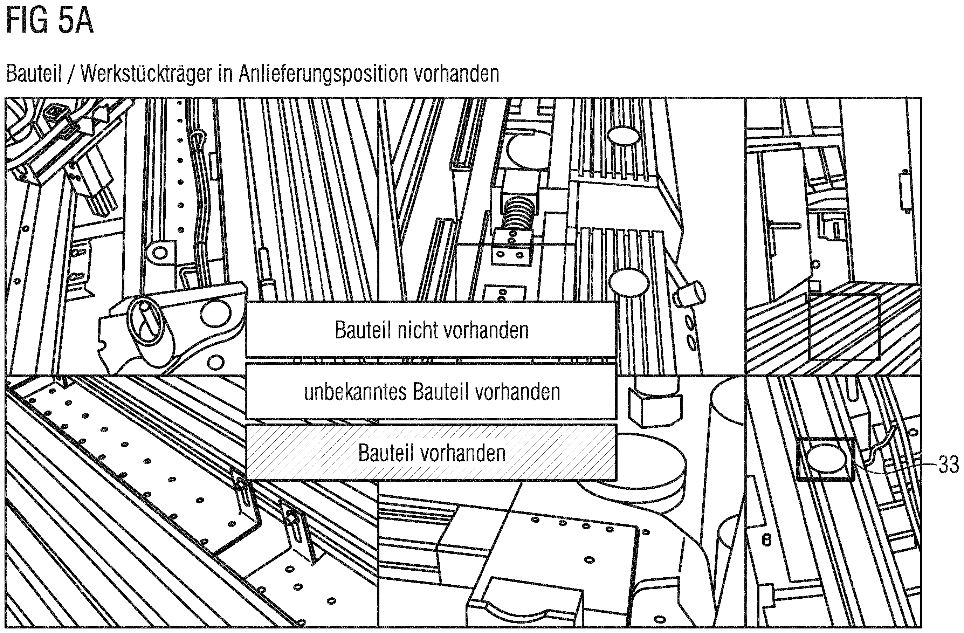

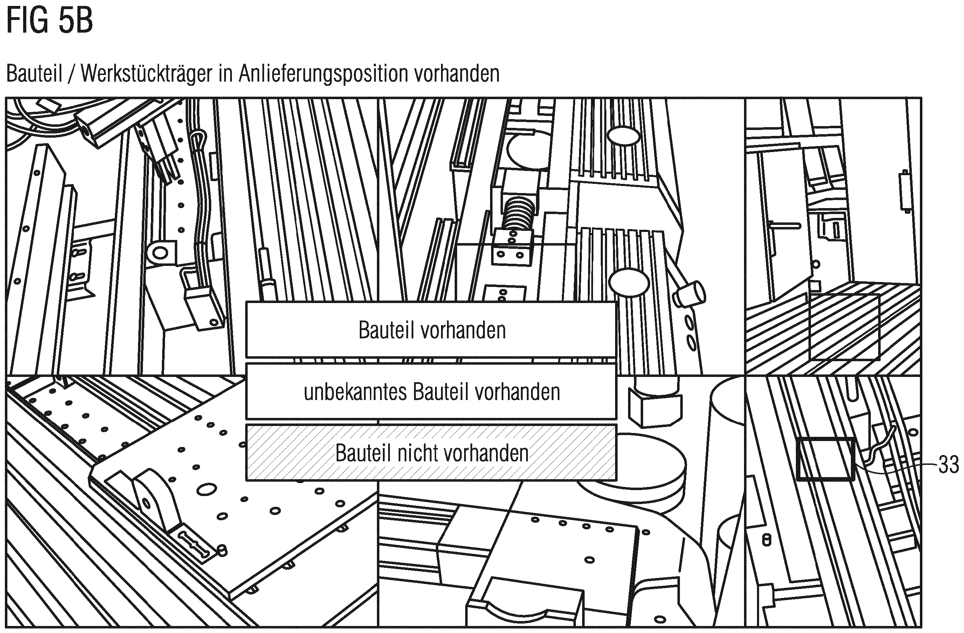

Die Figuren 5A und 5B zeigen beispielhaft, wie die Zuordnung von aufgenommenen Sensordaten zu Ausprägungen von Merkmalen durch Vergleich der aufgenommenen Sensordaten mit Soll-Sensordaten erfolgen kann. In allen Figuren 5 bis 12 sind jeweils sechs Bilder als aufgenommene Sensordaten gezeigt. Der hier überwachte Fertigungs- und/oder Montageprozess weist also sechs aufeinanderfolgende Schritte auf, die jeweils durch einen Sensor beobachtet werden. Der entsprechende Sensor erzeugt dann die gezeigten Bilder als Sensorsignale. In den in den Figuren 5 bis 12 gezeigten Beispielen ist der Sensor eine Kamera. Der Prozess verläuft von links oben gezeigten Bild bis zum rechts unten gezeigten Bild. Ein Ablauf des Prozesses beginnt also links oben und durchläuft die obere Zeile, um dann die untere Zeile bis zum rechten unteren Bild zu durchlaufen.

In Fig. 5A und 5B ist gezeigt, wie eine Ausprägung des Merkmals "Vorhandensein eines Bauteils in Anlieferungsposition" ermittelt werden kann. Die Anlieferungsposition liegt im linken oberen Bild, also im ersten Prozessschritt vor. Es wird hier ein Bereich 33 dieses Bildes definiert, in dem das Merkmal zu erkennen ist. Das Merkmal kann die Ausprägungen "Bauteil vorhanden", "Bauteil nicht vorhanden" und "unbekanntes Bauteil vorhanden" annehmen. In einem vorangegangenen Einlernprozess kann für jede dieser Ausprägungen ein Bild hinterlegt worden sein, in der das Merkmal im gezeigten Bereich 33 die entsprechende Ausprägung hat.

In Fig. 5A liegt das Bauteil im Bereich 33 des linken oberen Bildes vor, dieses aufgenommene Bild kann also der Merkmalsausprägung "Bauteil vorhanden" zugeordnet werden. In Fig. 5B liegt das Bauteil im Bereich 33 nicht vor. Das aufgenommene Sensorsignal wird also hier eine Übereinstimmung mit einem Soll-Sensorsignal zeigen, das der Merkmalsausprägung "Bauteil nicht vorhanden" zugeordnet ist.

Eine vollkommen analoge Situation kann beispielsweise vorliegen, wenn das Merkmal das Vorhandensein des Bauteils in einer Bearbeitungsposition ist. Auch hier können die Ausprägungen dieses Merkmals "Bauteil vorhanden", "Bauteil nicht vorhanden" und "unbekanntes Bauteil vorhanden" sein.

Eine analoge Auswertung ist beispielsweise auch bei dem Merkmal des Vorhandenseins des Bauteils in einer Auslieferposition möglich, wobei wiederum die Merkmalsausprägungen "Bauteil vorhanden", "Bauteil nicht vorhanden" und "unbekanntes Bauteil vorhanden" sein können.

Eine Auswertung wie Fig. 5A und 5B gezeigt ermöglicht in analoger Weise auch die Zuordnung des Merkmals, ob ein passendes Werkstück in einer Bearbeitungsposition vorhanden ist. Es würde wiederum ein Bereich 33 definiert, in dem zu erkennen ist, ob das passende Werkstück in der Bearbeitungsposition vorhanden ist. Dieses Merkmal kann beispielsweise die Ausprägungen haben: "leerer Werkstückträger vorhanden", "Nacharbeitsdurchschleusung vorhanden", "falsche Variante vorhanden" und "Ausschussprodukt vorhanden".

Ein mögliches Merkmal, das durch die Sensordaten erfasst werden kann, kann auch eine Bauteilgeschwindigkeit sein. Hierfür können beispielsweise mittels eines der Sensoren zwei Bilder in definiertem Zeitabstand nacheinander als Sensorsignal aufgenommen werden und mit einem geeigneten oder zwei geeigneten Soll-Bildern verglichen werden. Auch dieser Vergleich kann wieder in einem Bereich der entsprechenden Bilder erfolgen. Ein derartiges Merkmal kann beispielsweise die Ausprägungen "Geschwindigkeit normal", "Geschwindigkeit schneller" und "Geschwindigkeit langsamer" annehmen. Vergleichsmaßstab ist hierbei eine Soll-Geschwindigkeit eines Bauteils, die in einem Bereich 33 festgelegt wurde.

Mittels des in Fig. 5A und 5B gezeigten Vorgehens kann auch ein spezifisches Bauteil als Merkmal erkannt werden. Es wird dann beispielsweise in einem vorgegebenen Bereich des entsprechenden Bildes durch Vergleich mit dem entsprechenden Bereich des Soll-Bildes geprüft, ob eine bestimmte Eigenschaft vorhanden ist oder nicht. Ausprägungen eines solchen Merkmals können beispielsweise sein: "einmalige Eigenschaft erkannt", "einmalige Eigenschaft unbekannt", "Prozessschritt-spezifisch hergestelltes Merkmal erkannt (z.B. Oberflächenbeschaffenheit, Material, Formdimension)" und "Bauteilvariante erkannt".

Die Merkmale können auch Betriebsmittel der zur Durchführung des überwachten Fertigungs- und/oder Montageprozesses verwendeten Vorrichtung betreffen oder Zustände eines Mitarbeiters, der eine solche Vorrichtung bedient. Alle standardisierten, sich wiederholenden, mit Bildsensoren wahrnehmbare Tätigkeiten können so anhand von wiederkehrenden konkreten Zuständen oder in Form von vorgegebenen Mustern zur Erschließung von Zuständen in Form von Merkmalen erkannt werden. Diese Muster können sich einmal auf numerische, maschinenlesbar codierte oder alphabetische Reihen beziehen, die selbstständig innerhalb eines definierten Merkmalbereichs erkannt werden können oder auf algorithmenbasierte Ähnlichkeitsbeziehungen. Dies ist bei der Gesichtserkennung zur Identifikation eines manuellen Prozesseingriffs der Fall. Hierbei wird nicht das konkrete Gesicht in allen möglichen Erscheinungsperspektiven eingelernt, sondern der Bildbereich in dem nach einem erscheinenden Gesicht gesucht werden soll um diese Ausprägung dem Merkmal "Manueller Eingriff in Prozess" zuzuordnen.

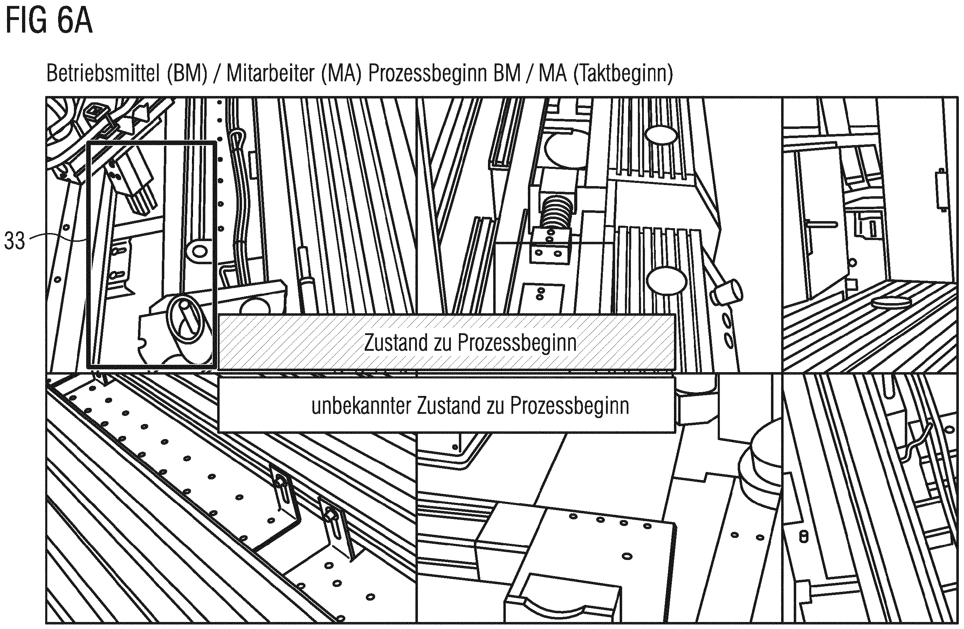

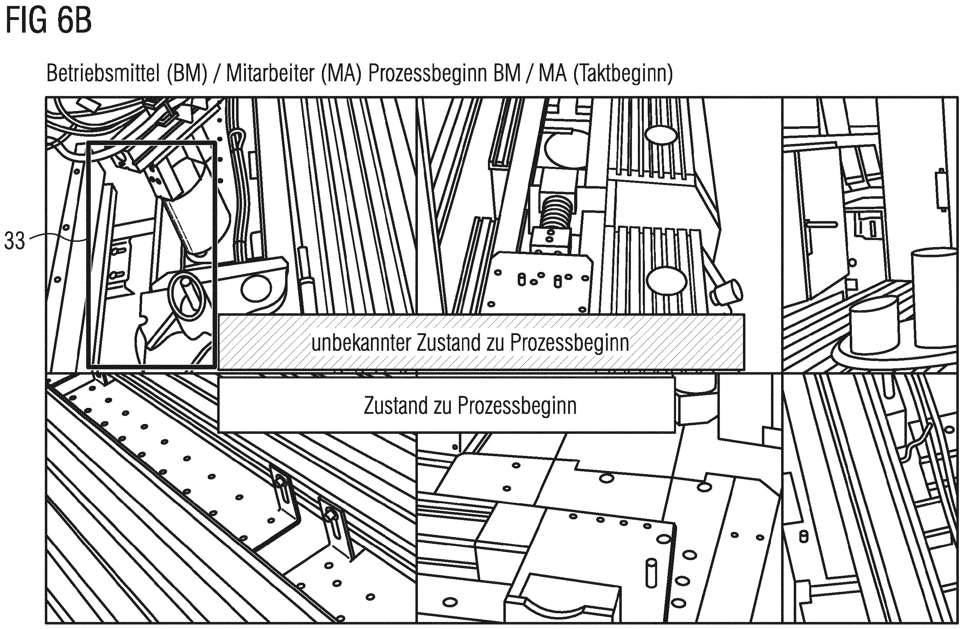

In Fig. 6A und 6B betrifft das Merkmal einen Zustand des Betriebsmittels zu Prozessbeginn bzw. Taktbeginn. Es wird wieder ein Bereich 33 des vom ersten Sensor aufgenommenen Bildes mit einem entsprechenden Bereich eines Soll-Bildes verglichen und daraus die Ausprägung des Merkmals abgeleitet, die beispielsweise sein kann: "bekannter Zustand zu Prozessbeginn" und "unbekannter Zustand zu Prozessbeginn". In Fig. 6A liegt im Bereich 33 des linken oberen Bildes ein bekannter Zustand vor. Die Ausprägung des Merkmals ist hier also "bekannter Zustand zu Prozessbeginn". Im Gegensatz dazu ist der Zustand im Kasten 33 in Fig. 6B unbekannt, so dass das Merkmal hier die Ausprägung "unbekannter Zustand zu Prozessbeginn" annimmt.

Eine entsprechende Auswertung ist auch beispielsweise möglich, wenn das Merkmal den Zustand der Bearbeitung zum Taktende bzw. Zeitende, also einen Endzustand der Bearbeitung, betrifft. Auch können die Ausprägungen "bekannter Zustand zu Prozessende" und "unbekannter Zustand zu Prozessende" angenommen werden.

Auf entsprechende Weise kann auch ein Merkmal "verharren in Warteposition" ausgewertet werden, das angibt, ob sich ein Betriebsmittel oder ein Mitarbeiter in einer Warteposition befindet. Dieses Merkmal kann beispielsweise die Ausprägungen "Betriebsmittel verharrt in Warteposition", "Betriebsmittel verharrt nicht in Warteposition" und "Nebentätigkeit (alternatives Warten)" annehmen.

Analog wie in Fig. 6A und 6B gezeigt, kann auch ein Merkmal ausgewertet werden, das die Betriebsbereitheit eines Betriebsmittels ist. Dieses kann beispielsweise die Ausprägungen "Betriebsmittel betriebsbereit", "Betriebsmittel nicht betriebsbereit" und "spezieller betriebsbereiter Zustand" annehmen.

Auf analoge Weise wie das Betriebsmittel kann auch ein Zustand eines Mitarbeiters als Merkmal in die Überwachung eingehen. Das Merkmal kann beispielsweise sein, ob ein Mitarbeiter vorhanden und in Arbeitsausgangssituation ist. Ausprägungen eines solchen Merkmals können dann z. B. sein: "Mitarbeiter arbeitsbereit", "Mitarbeiter nicht arbeitsbereit" und "Mitarbeiter in speziellem Zustand".

In entsprechender Weise kann das Merkmal auch betreffen, ob ein manueller Prozesseingriff erfolgt. Ausprägungen dieses Merkmals können dann z. B. sein: "manueller Prozesseingriff erfolgt" und "kein manueller Eingriff in den Prozess".

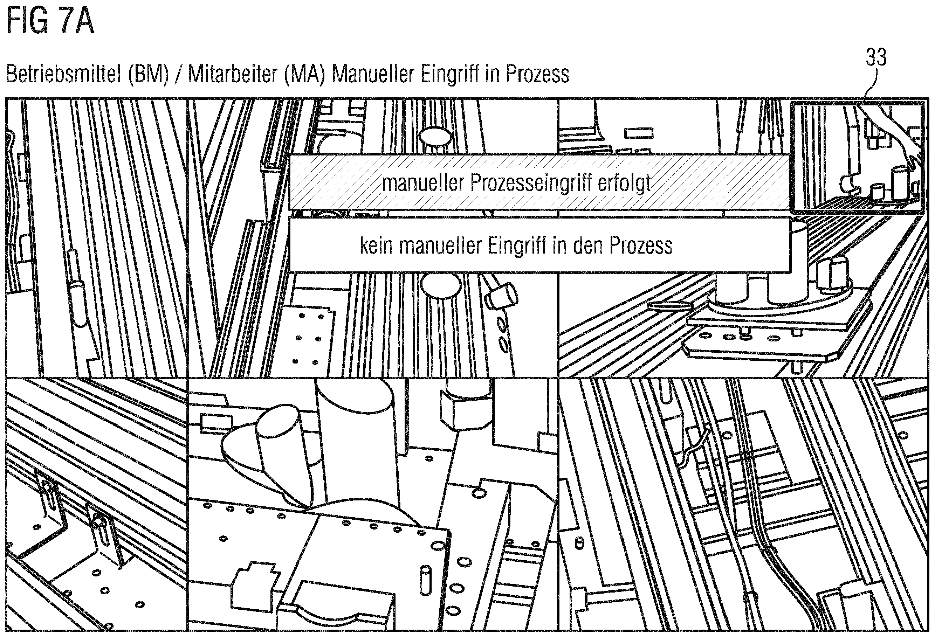

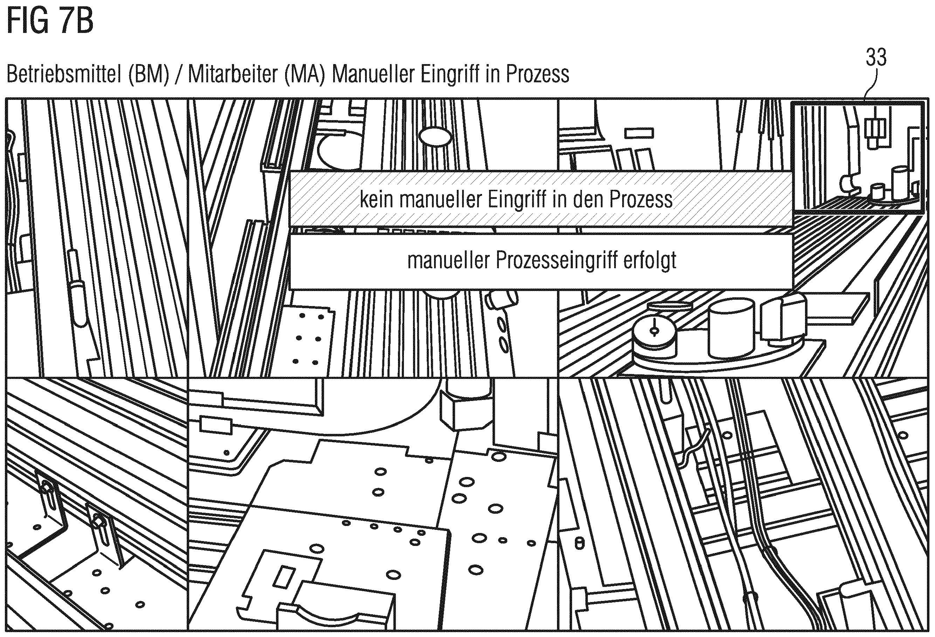

Dies ist in den Fig. 7A und 7B beispielhaft gezeigt. Hier greift in Fig. 7A im dritten Prozessschritt, dessen Bild rechts oben gezeigt ist, ein Mitarbeiter im Bereich 33 mit seiner Hand in den Prozess ein. In Fig. 7A hat daher das Merkmal die Ausprägung "manueller Prozesseingriff erfolgt".

In Fig. 7B erfolgt kein solcher Eingriff, so dass hier das Merkmal die Ausprägung "kein manueller Eingriff in den Prozess" annimmt.

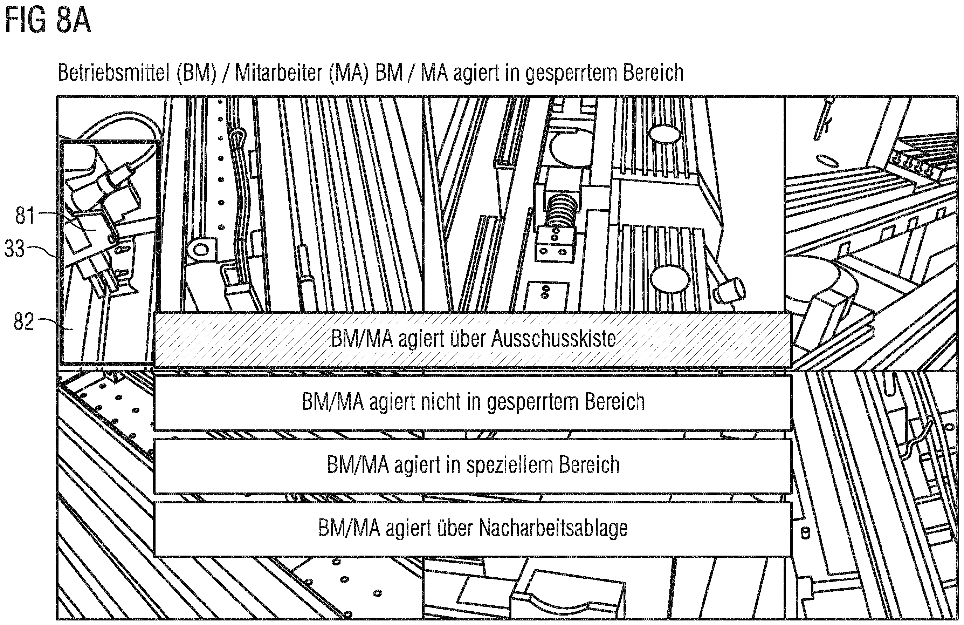

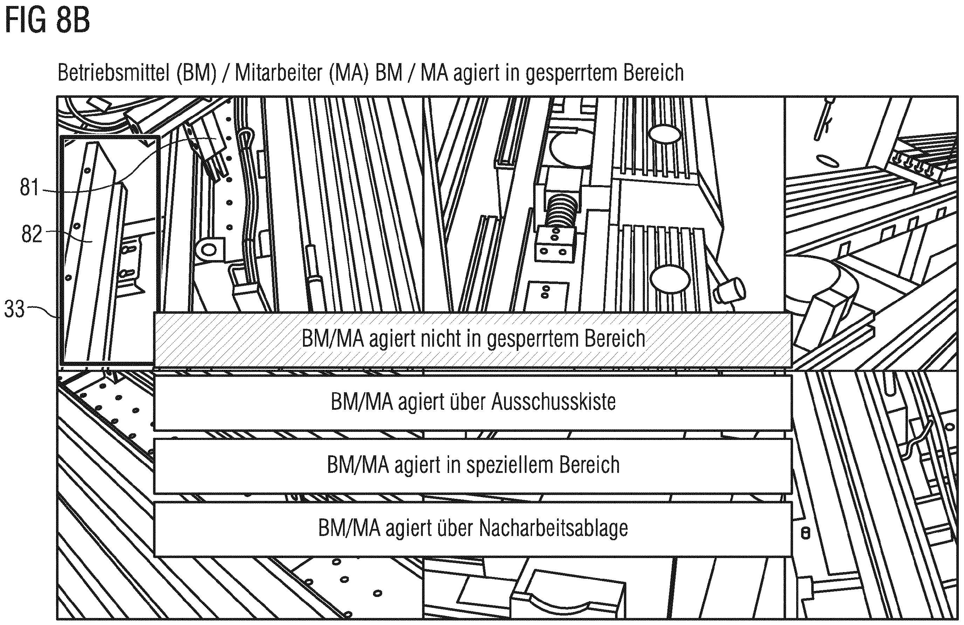

Ein mögliches Merkmal ist auch, ob ein Betriebsmittel oder ein Mitarbeiter in einem gesperrten Bereich agiert. Dies ist in den Fig. 8A und 8B gezeigt. In den Fig. 8A und 8B wird dieses Merkmal im Bereich 33 im linken oberen Bild des ersten Schrittes überprüft. Das Merkmal kann beispielsweise Ausprägungen annehmen wie "Betriebsmittel/Mitarbeiter agiert über Ausschusskiste", "Betriebsmittel/Mitarbeiter agiert nicht in gesperrtem Bereich", "Betriebsmittel/Mitarbeiter agiert in speziellem Bereich" und "Betriebsmittel/Mitarbeiter agiert über Nacharbeitsablage". In Fig. 8A ist ein Betriebsmittel 81 in Form eines Robotergreifers über einer Ausschusskiste 82 angeordnet, in die er Ausschussteile von dieser Position aus fallen lassen kann. Daher hat das Merkmal in Fig. 8A die Ausprägung "Betriebsmittel/Mitarbeiter agiert über Ausschusskiste".

In Fig. 8B agiert das Betriebsmittel 81 nicht in einem gesperrten Bereich, so dass hier das Merkmal die Ausprägung "Betriebsmittel/Mitarbeiter agiert nicht in gesperrtem Bereich" annimmt.

Analog wie in den vorstehend beschriebenen Beispielen kann als Merkmal auch ausgewertet werden, ob ein Betriebsmittel oder ein Mitarbeiter eine geteilte Ressource benötigt. Dieses Merkmal kann dann beispielsweise die Ausprägungen "geteilte Ressource benötigt" oder "geteilte Ressource nicht benötigt" annehmen.

Sind die Ausprägungen aller in die Überwachung eingehenden Merkmale ermittelt, können diese nun gemeinsam mit vorgegebenen Ausprägungen der entsprechenden Merkmale verglichen werden und aus diesem gemeinsamen Vergleich ein Ergebnis der Überwachung abgeleitet werden.

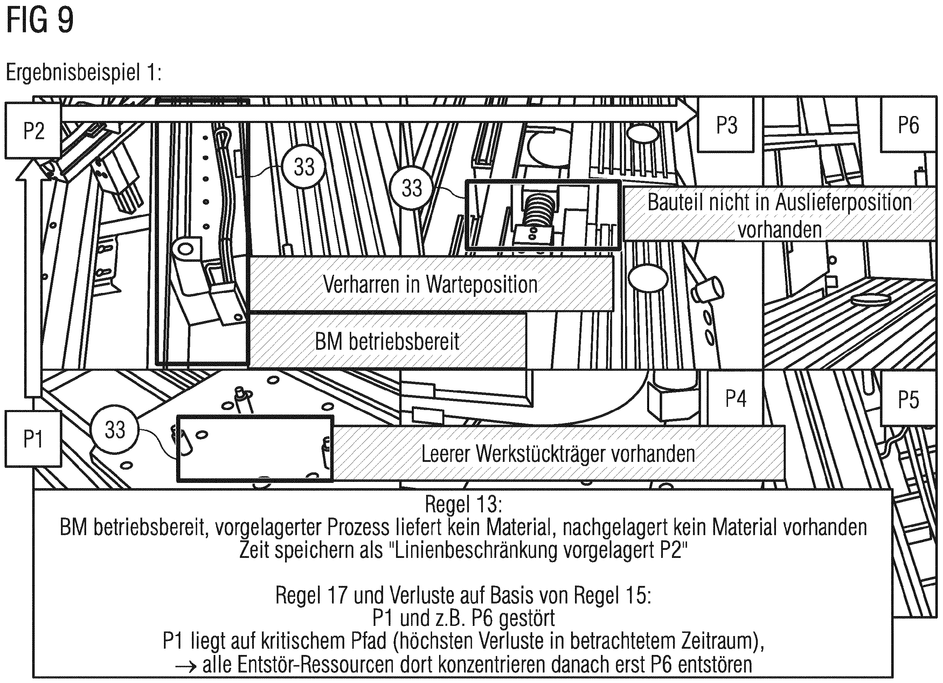

Fig. 9 zeigt ein Beispiel eines solchen Vergleichs zur Ableitung eines Ergebnisses der Überwachung. Entsprechend den oben beschriebenen Merkmalen wurde im ersten Prozessschritt, dessen Sensorsignal links unten gezeigt ist, ermittelt, dass kein Bauteil vorhanden ist, sondern nur ein leerer Werkstückträger dort verharrt. Das Betriebsmittel des Prozesses 2 wäre betriebsbereit und verharrt in einer Warteposition. Im nachfolgenden Prozess 3 ist kein Bauteil in Auslieferposition vorhanden. Ein Ergebnis kann jetzt beispielsweise durch Vergleich mit einer Regelbibliothek abgeleitet werden. Eine derartige Regel kann hier beispielsweise lauten: "Wenn ein Schritt P2 stoppt, weil ein vorgelagerter Schritt P1 kein Material mehr liefert, dann stoppe die Zeit vom letzten bearbeiteten Stopp bis zum nächsten und speichere diese als "Linienbeschränkung vorgelagert P2"".

Eine weitere Regel kann beispielsweise lauten: "Wenn zwei Schritte P1, und P6 zeitgleich (mit einer bestimmten Toleranz) einen Fehler oder Stillstand aufweisen, dann wird nach dem Ende aller Fehler der am längsten andauernde Fehler der Kategorie "dynamischer Produktivitätsengpass" zugeordnet". Diese Ergebnisse können nun an eine oder mehrere der definierten Schnittstellen kommuniziert werden um Gegenmaßnahmen zu bewirken.

In einer weiteren Regel kann ein dynamischer Point-of-Care für den Fall einer produktionsbegleitenden Anwendung des Überwachungssystems bestimmt werden. Tritt beispielsweise in mehreren Schritten eine Störung auf, so dass diese Schritte anhalten, dann werden die Ergebnisse der Auslastungen und Verluste der Schritte über einen bestimmten Zeitraum z.B. die letzten 3 Schichten, miteinander verglichen und Ressourcen zur Entstörung zuerst dorthin geleitet, wo die größten Verluste über den repräsentativen Zeitraum bisher aufgetreten sind. Anschließend können dann die Ressourcen zur Entstörung zum zweitgrößten Verlustort geleitet werden. Als Ergebnis ergibt sich hier also eine Priorität der zu entstörenden Stellen an verteilten Orten. In Fig. 9 würden anhand dieser Regel alle Entstörressourcen zum 1. Schritt P1 geleitet, weil dort die höchsten Verluste auftreten.

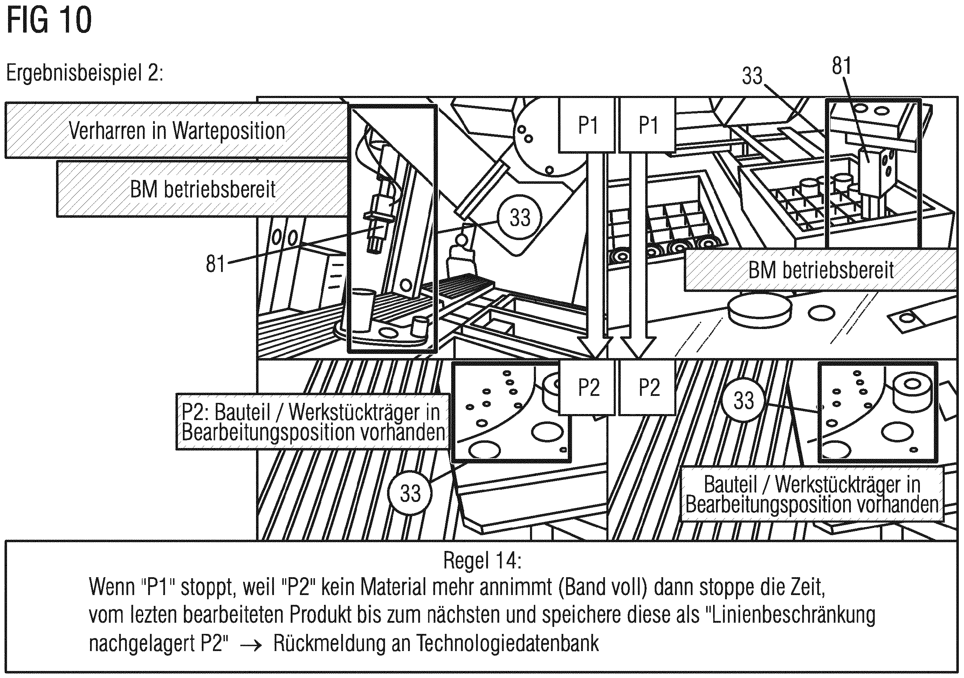

Fig. 10 zeigt ein weiteres Beispiel, wie aus ermittelten Merkmalsausprägungen ein Ergebnis der Überwachung abgeleitet werden kann. Merkmalsausprägungen, die wie oben beschrieben ermittelt wurden, sind hier "Betriebsmittel verharrt in Warteposition" und "Betriebsmittel ist betriebsbereit". Darüber hinaus ist eine Merkmalsausprägung "Bauteil/Werkstückträger ist in Anlieferungsposition vorhanden". Es zeigt die obere Zeile einen ersten Schritt und die untere Zeile einen zweiten Schritt. Eine Regel kann hier lauten: "Wenn ein vorgelagerter Schritt P1 stoppt, weil ein nachgelagerter Schritt P2 kein Material mehr annimmt (weil beispielsweise im Schritt P2 eine Störung vorliegt), dann stoppe die Zeit vom letzten bearbeiteten Produkt bis zum nächsten und speichere diese als "Linienbeschränkung nachgelagert P2" und melde diese beispielsweise an eine Technologiedatenbank zurück.". Auf diese Weise kann als Ergebnis ein Auslastungsverlust der Anlage durch einen blockierten nachgelagerten Schritt ermittelt werden. Zur Steigerung der Robustheit der Auswertung sind hier die Merkmale der beiden beteiligten Prozesse jeweils mit zwei separaten Sensoren erfasst. Im Schritt P1 beurteilen zwei Sensoren aus unterschiedlichen Blickwinkeln, ob das gleiche Betriebsmittel, hier der Robotergreifer, betriebsbereit ist. Ähnliches gilt für den Schritt 2, welcher aus einer sehr ähnlichen Perspektive mit zwei Sensoren hinsichtlich seiner Merkmalsausprägung geprüft wird. Nur bei einer eindeutigen Kombination, also je Prozessschritt beide eingesetzten Sensoren und den zugehörigen Sensordaten die gleiche Merkmalsausprägung zugeordnet wird, erfolgt eine Schlussfolgerung, wie beispielhaft oben beschrieben.

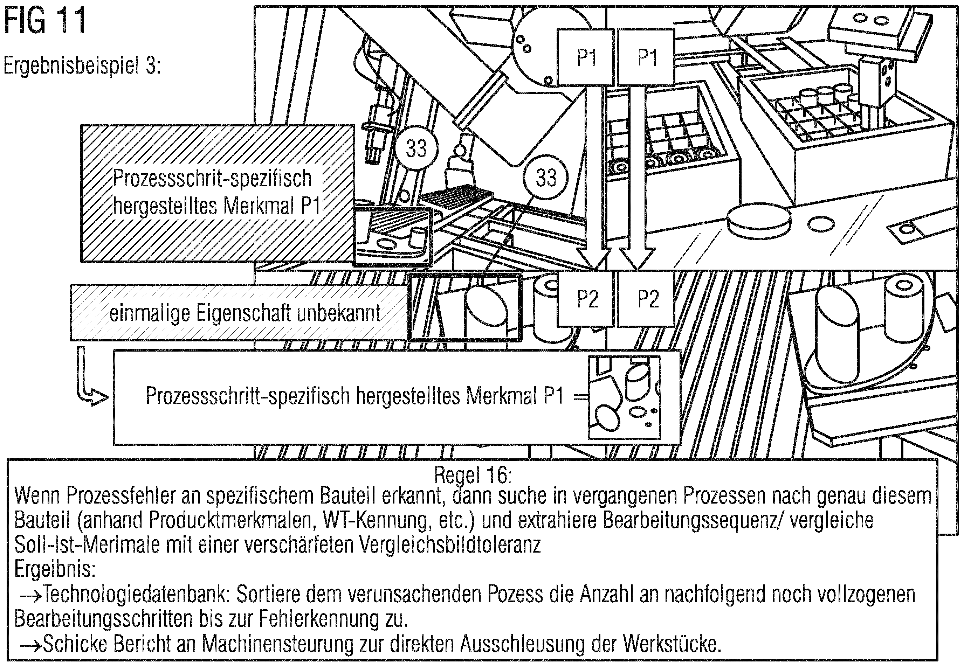

Fig. 11 zeigt ein weiteres Beispiel, wie aus ermittelten Merkmalsausprägungen ein Ergebnis abgeleitet werden kann. Die Merkmalsausprägungen sind hier im ersten Schritt P1 "Prozessschritt-spezifisch hergestelltes Merkmal" und im zweiten Schritt P2 "einmalige Eigenschaft unbekannt". Eine Regel zur Fehlererkennung könnte beispielsweise lauten: "Wenn an einem spezifischen Bauteil ein Prozessfehler erkannt wird, dann suche in vergangenen Schritten nach genau diesem Bauteil (beispielsweise anhand von Produktmerkmalen, WT-Kennung etc.) und extrahiere eine Bearbeitungssequenz oder vergleiche Soll-Ist-Merkmale mit einer verschärften Vergleichsbildtoleranz und sortiere dem verursachenden Schritt die Anzahl an nachfolgenden noch vollzogenen Bearbeitungsschritten bis zur Fehlererkennung zu.". In Fig. 11 kann ein Prozessfehler beispielsweise als Merkmalsausprägung "einmalige Eigenschaft unbekannt" erkannt werden. Es wird dann in vergangenen Schritten nach genau diesem Bauteil gesucht und die Sensordaten, also die ermittelten Bilder, mit verschärfter Vergleichsbildtoleranz verglichen. Als Ergebnis kann dem verursachenden Schritt die Anzahl an nachfolgenden noch vollzogenen Bearbeitungsschritten bis zur Fehlererkennung zusortiert werden und ein Bericht an eine Maschinensteuerung zur direkten Ausschleusung der Werkstücke geschickt werden.

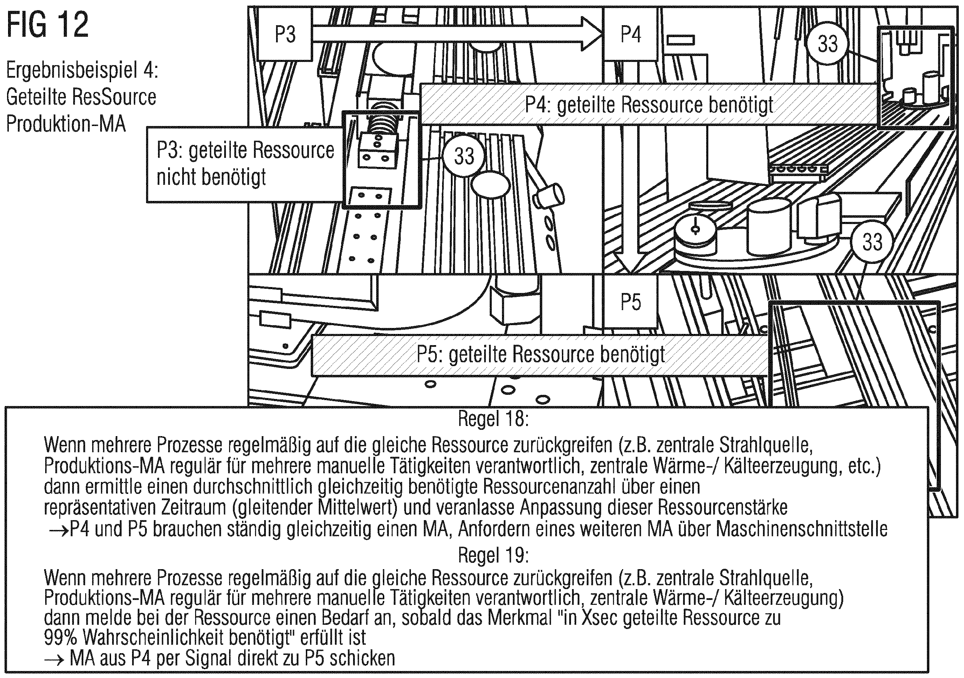

Fig. 12 zeigt ein weiteres Beispiel, wie bestimmten Merkmalsausprägungen ein Ergebnis zugeordnet werden kann. Es wird hier als Merkmalsausprägung in einem Schritt P4 ermittelt "geteilte Ressource benötigt" und in einem Schritt P5 "geteilte Ressource benötigt". Die gleiche Ressource wird in diesem Moment im Prozesschritt P3 nicht benötigt. Es kann nun eine Regel vorgegeben werden, die den geteilten Ressourcenbedarf ermittelt. Sie kann beispielsweise lauten: "Wenn mehrere Prozesse regelmäßig auf die gleiche Ressource zurückgreifen, dann ermittele eine durchschnittlich gleichzeitig benötigte Ressourcenzahl über einen repräsentativen Zeitraum (gleitender Mittelwert) und veranlasse Anpassung dieser Ressourcenstärke.". Im gezeigten Beispiel der Fig. 12 benötigen die Schritte P4 und P5 (angenommen dies ist der Normalfall) gleichzeitig einen Mitarbeiter, so dass anhand dieser Regel ein weiterer Mitarbeiter über eine Maschinenschnittstelle angefordert werden kann.

Es kann außerdem auch eine Regel vorgesehen werden, über die geteilte Ressourcen prognostizierbar gemacht werden. Sie kann beispielsweise lauten: "Wenn mehrere Prozesse regelmäßig auf die gleiche Ressource zugreifen, dann melde bei der Ressource einen Bedarf an, sobald das Merkmal "in x Sekunden geteilte Ressource zu y % Wahrscheinlichkeit benötigt" erfüllt ist.". Im in Fig. 12 gezeigten Beispiel könnte der Mitarbeiter dann vom Schritt P4 per geeignetem Signal direkt zum Schritt P5 geschickt werden.

Die Zuordnung erkannter Merkmalsausprägungen zu bestimmten Ergebnissen kann vorteilhaft mittels einer Regelbibliothek erfolgen. In einer solchen können Merkmale zu allgemeingültigen Regeln verknüpft werden. Dies kann für vordefinierte Merkmalsausprägungen, die im Einlernmodus mit konkreten Sensorinformationen für den vorliegenden Fall verknüpft werden, automatisch geschehen. Für anwendungsfall-spezifische Merkmale und/oder Merkmalsausprägungen können im gleichen Verknüpfungsschema neue Regeln erstellt werden..

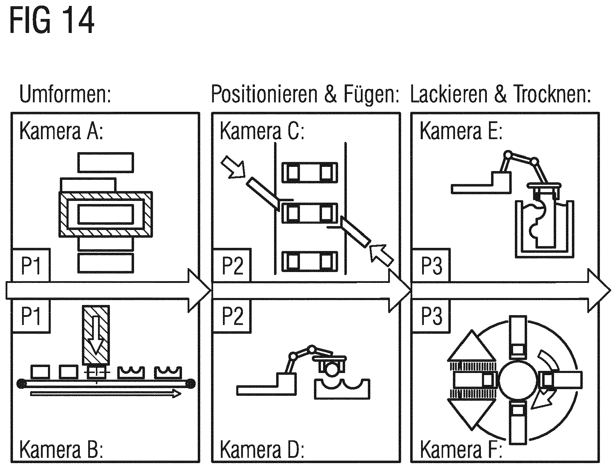

Figur 14 illustriert einen möglichen Prozessablauf mit drei Prozessen, die miteinander verkettet sind. Jedes der Teilbilder zeigt hier das Bild je einer Kamera. Hierbei durchläuft ein mögliches Bauteil erst einen Umformschritt, der von zwei Kameras (A und B) beobachtet wird. Hierbei kann z.B. durch Kamera A eine falsche Bauteilvariante oder die Korrektheit des vorliegenden Bauteils in der Draufsicht kontinuierlich geprüft werden, während für den gleichen Prozess die Kamera B den Beginn und das Ende der Bearbeitungszeit und die Betriebsbereitheit der Umformpresse wahrnimmt. Im zweiten Schritt P2 wird durch die Kamera C die Anwesenheit und Positionierung der Bauteile erkannt. Kamera D überwacht die Betriebsbereitheit des Fügeroboters sowie die Anwesenheit eines zu fügenden Einzelteils. In Schritt P3 wird durch die Kamera E beispielhaft die Merkmale an der Bauteiltauchvorrichtung für das Lackieren hinsichtlich ihrer Betriebsbereitheit und Bearbeitungszeitanfang und -Ende aufgenommen. Kamera F registriert den Status der Trockeneinrichtung und erkennt dort ebenfalls manuelle Prozesseingriffe. Alle Kameras überwachen zudem die Bauteilgeschwindigkeit an bestimmten Orten und ob ein Betriebsmittel ein Bauteil in einem gesperrten Bereich ablegt. Durch diese Merkmale können nun die verketteten Prozesse in Beziehung zueinander gesetzt werden und Störursachen zugeordnet und hieraus echtzeitnah Ergebnisse und Maßnahmen abgeleitet und zurückgekoppelt werden. Die Verknüpfung der oben genannten Merkmale erfolgt anhand von definierten kombinatorischen Regeln.

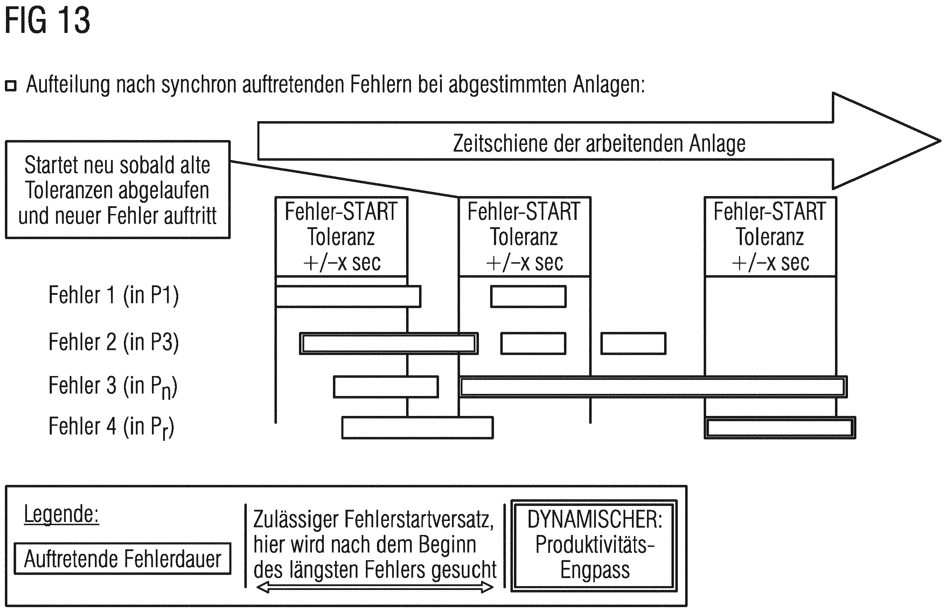

Im Folgenden sollen einige Beispiele möglicher Regeln gegeben werden, die in einer solchen Regelbibliothek zur Anwendung kommen können.
1) Taktzeit-Abstimmungsanalyse, Taktlängenabgleich: Speichere eine Zeit, bis ein bestimmter Bildbereich wieder in seinen Ausgangszustand zurückkehrt, als "Taktzeit P2" (z.B. als Mittelwert: das Speichern wird x-mal pro durchgeführtem Schritt ausgeführt. Bei manuellen Tätigkeiten kann ein Fixpunkt definiert werden, wie beispielsweise von "Tür auf" bis "Tür wieder auf".) Ergebnis dieser Regel können Histogramme über Taktlängen der Einzeltakte aller aufgenommenen Prozessschritte pro Bauteilvariante mit Angabe der Streuungen, Minima und Maxima der Taktlängen bei n Wiederholungen pro Bauteilvariante sein. Dies resultiert in einer vorgeschlagenen Bearbeitungsreihenfolge der Varianten zwecks Ausgleich schwankender Taktlängen je nach Variante pro Prozessschritt.
2) Taktabstimmungsanalyse, Synchronität/Asynchronität: Vergleiche Anfangszeitpunkte der Bearbeitungstakte der einzelnen Prozessschritte miteinander: Fangen P1-P2-P3 zu exakt gleicher Zeit an (falls n Transporttakte dazwischen liegen) oder mit exakt determiniertem Taktversatz? Falls mit Taktversatz: wie groß ist der mittlere Taktversatz und dessen Streuung? Resultat dieser Regel ist der mittlere Versatz aller Taktanfangszeitpunkte zueinander je nach gefertigter Bauteilvariante unter Angabe der jeweiligen Streuung
3) Auslastung Einzelprozess: Wenn ein gegebener Schritt für länger als eine reguläre Wartezeit stoppt, dann stoppe die Zeit vom letzten bearbeiteten Produkt bis zum nächsten bearbeiteten Produkt und speichere diese als Kurzstillstandszeit des entsprechenden Schrittes.
4) Störungserkennung Anlagen-Komponente: Wenn ein Schritt stoppt, obwohl ein Werkstück vorhanden ist und der darauffolgende Schritt Material annehmen würde, dann prüfe, ob in den vom fraglichen Schritt aufgenommenen Sensordaten Bewegung vorhanden ist. Ist dies nicht der Fall, dann speichere die Stillstandszeit als Störung des entsprechenden Schrittes bzw. der diesen Schritt ausführenden Anlagenkomponente.
5) Manuelle Entstörung durch Mitarbeiter: Wenn in einem Schritt eine Störung vorliegt, dann suche in den Sensordaten dieses Schrittes nach beispielsweise einer Person, einem Gesicht, einem Arm, einer Hand, einem Handschuh oder dergleichen (z.B. indirekte Merkmale wie einem sichtbaren Türgriff oder einer Wartungsklappe, die sich bewegt) und speichere die Zeit von erster bis letzter Erkennung als "manuelle Entstörung" des entsprechenden Schrittes. Hierbei können auch vorzugsweise gesichtserkennende Algorithmen eingesetzt werden um den Prozesseingriff durch wechselnde Mitarbeiter zu erkennen.
6) Störung durch Einzelteilmangel in Zuführsystem: Wenn ein Schritt stillsteht, obwohl ein entsprechender Werkstückträger bereit wäre und ein entsprechendes Merkmal in einem Sensorsignal dieses Schrittes kein Bauteil zeigt, dann speichere die Zeit, bis in dem entsprechenden Sensorsignal wieder ein Bauteil vorliegt und der entsprechende Schritt weiterläuft als "Störung durch Einzelteilmangel in Zuführsystem" im entsprechenden Schritt.
7) Störung durch unbekannte Auffälligkeit: Wenn ein bestimmter Schritt stillsteht, obwohl ein Bauteil vorhanden ist und in den Sensordaten dieses Schrittes Abweichungen vom Normalzustand (Referenz auf normalen Zyklus) vorliegen, dann speichere die Zeit als "unbekannte Störung" im entsprechenden Schritt und sende die Sequenz der Sensorsignale an einen Auswerter zur expliziten Begutachtung und Fehlerbenennung und/oder Kategorisierung.
8) Ausschuss: Wenn in einem Schritt ein Werkstück oder Handhabungsgerät in einem bestimmten Bereich agiert (z.B. über einem Ausschleuseschacht oder einer Ausschusskiste), dann erhöhe als Ergebnis eine Variable "Ausschuss" in dem entsprechenden Schritt um 1.
9) Durchschleusen von Nacharbeit/leerer Werkstückträger: Wenn in einem Schritt ein Werkstückträger durchfährt (z.B. Nacharbeit oder leerer Werkstückträger) und Sensordaten des entsprechenden Schrittes einen Stillstand des Betriebsmittels zeigen, dann speichere die Zeit vom letzten bearbeiteten Produkt bis zum nächsten als "Stillstand durch Bauteilmangel im Werkstückträger-System" im entsprechenden Schritt.
10) Erkennung Geschwindigkeitsverlust: Wenn in einem Schritt sich ein Handhabungsgerät oder Werkstückträger langsamer bewegt als in einem aufgezeichneten Referenzzyklus, dann speichere die Zeit vom letzten normalen Zyklus bis zum nächsten als "Geschwindigkeitsverlust" im entsprechenden Schritt.
11) Berechnung eines REAL-Automatisierungsgrades (Formel nach Bomm, 1992): Wenn in einem Schritt Px Stillstand erkannt wird und ein Gesicht erkannt wird (bzw. das Merkmal für einen manuellen Eingriff aktiviert ist), dann akkumuliere dies zum Ereignis t_{h ohne Personal}, und berechne synchron den Auto _{real, Px}, = ((t_{h +} tₙ) ohne Personal) / (t_{h +} tₙ)
12) Statistische Durchlaufzeit: Wenn ein spezifisches Bauteil oder Werkstückträger erkannt wird, dann messe die Zeit zwischen dem Auftauchen des Bauteils bzw. Werkstückträgers im ersten Bild und im letzten Bild (z.B. anhand der Zeitstempeldifferenz) und gebe dies als Durchlaufzeit je Bauteilvariante aus. Die Durchlaufzeit kann einmal zwischen den einzelnen Prozessschritten gemessen werden und als Gesamtergebnis vom ersten Schritt der Anlage bis Verlassen des letzten Schritts der Anlage gemessen werden.
13) Auslastungsverlust durch blockierten vorgelagerten Schritt: Wenn ein nachgelagerter Schritt P2 stoppt, weil ein vorgelagerter Schritt P1 kein Material mehr liefert, dann stoppe die Zeit vom letzten bearbeiteten Produkt bis zum nächsten und speichere diese als "Linienbeschränkung vorgelagert P2".
14) Auslastungsverlust durch blockierten nachgelagerten Schritt: Wenn ein vorgelagerter Schritt P2 stoppt, weil ein nachgelagerter Schritt P3 kein Material mehr annimmt (z.B. weil das Band voll ist), dann stoppe die Zeit vom letzten bearbeiteten Produkt bis zum nächsten und speichere diese als "Linienbeschränkung nachgelagert P2".
15) Berechnung kritischer Pfad für die Gesamtanlagen-Produktivität (dynamischer Engpass): Wenn in mehreren Schritten P1, P3 und Pₙ zeitgleich (mit einer gewissen Toleranz bezüglich des Anfgangszeitpunkts) ein Fehler oder Stillstand gemäß Regeln 4) bis 9) auftritt, dann wird nach dem Ende aller dieser Fehler der am längsten andauernde Fehler der Kategorie "dynamischer Produktivitätsengpass" zugeordnet. Falls ein gepuffertes System (d.h. ohne Anhalten des Gesamtsystems bei Auftreten eines Einzelfehlers) vorliegt, dann sind Überschneidungen von Produktivitätsengpässen möglich, d.h. ein kritischer erster Fehler läuft noch, während ein anderer Schritt außerhalb des vorgegebenen Toleranzbereiches auch ausfällt und Fehler 1 behoben wird, Fehler 2 jedoch erst später. Ein reiner Materialmangel durch vorgelagerte Bereiche (leeres Band) als Stillstandsgrund ist nicht möglich, da der Fehler hierfür in einem anderen Schritt begründet ist.
   Der Unterschied zu einer reinen Summe der Fehlerdauer je Fehlertyp liegt in der Kritikalität des Fehlers bezüglich des Gesamtoutputs der Anlage. Ein Fehler, der direkte Produktivitätseinbußen bezüglich des Gesamtanlagenoutputs erzeugt, wird hier höher gewichtet als ein synchroner Fehler, der hierauf keinen oder einen kleineren Einfluss hat. Dies ist in Figur 13 illustriert: Wenn ein Fehler in einem Prozesschritt auftritt, startet die Fehlertoleranz, innerhalb derer ein Fehlerbeginn als zeitsynchron gezählt wird (dünnen Striche bezüglich der Fehler-START-Toleranz). Nach Ablauf aller Fehler/Stillstände, die in dieser Zeitperiode begonnen habe wird der längste Fehler mit seiner Dauer der Kategorie "dynamischer Produktivitätsengpass durch Pₙ und Bauteilvariante x" zugeordnet. Neben der Dauer wird auch die Häufigkeit der zutreffenden Zuordnung ausgewertet. Bei nicht abgetakteten Systemen (d.h. Bearbeitungszeit der einzelnen Prozessschritte stark unterschiedlich) gilt neben der Fehlerlänge als 2. Kriterium für die Kritikalität die Taktreserve je Prozessschritt (d.h. die Differenz zwischen längster Taktzeit des FS / MS und der Taktzeit des betrachteten Prozessschrittes). Die Einstufung der Kritikalität und somit die Zuordnung zum dynamischen Produktivitätsengpass erfolgt nach kleinstem Verhältnis zwischen Taktreserve und Fehlerlänge. Für alle in der gleichen Fehler-Start-Toleranz loslaufenden Fehler wird dieser Gradient gebildet.
16) Fehlerketten: Wenn ein Prozessfehler an einem spezifischen Bauteil erkannt wird, dann suche in vergangenen Schritten innerhalb einer sinnvollen Periode, z.B. dem doppelten der für diese Variante ermittelten statistischen Durchlaufzeit, nach genau diesem Bauteil (beispielsweise anhand von Produktmerkmalen, WT-Kennung usw.) und extrahiere eine Bearbeitungssequenz oder vergleiche Soll-Ist-Merkmale mit einer verschärften Vergleichsbildtoleranz und sortiere dem verursachenden Schritt die Anzahl an nachfolgenden noch vollzogenen Bearbeitungsschritten bis zur Fehlererkennung zu. Anders formuliert: Wenn ein Prozessfehler an einem spezifischen Bauteil erkannt wird, dann suche in vergangenen Schritten nach genau diesem Bauteil und extrahiere:
   - eine Bearbeitungssequenz der vorgelagerten Schritte an exakt diesem Bauteil und vergleiche IST-Merkmale mit einer verschärften Abgleichungstoleranzschwelle mit bekannten SOLL-Zuständen und speichere die Überdeckung oder prozentuale Abweichung vom nächst näheren SOLL-Zustand.
   - Definiere dann den Schritt mit der größten prozentualen Abweichung vom SOLL-Zustand als Verursacher und zähle die Anzahl an nachfolgenden noch vollzogenen Bearbeitungsschritten bis zur Fehlererkennung bzw. Bauteilausschleusung und
   - summiere die Zeit bis zur Fehlererkennung bzw. Bauteilausschleusung und veranlasse die Bauteilausschleusung, falls dies noch nicht erfolgt ist.
17) Dynamischer Point-of-Care: Wenn in Schritten P1, P3 und Pₙ eine Störung auftritt und die Schritte anhalten, dann vergleiche die Ergebnisse der Auslastungen und Verluste (Regeln 2 - 8) der Schritte über einen repräsentativen Zeitraum miteinander und leite Ressourcen zur Entstörung zuerst dorthin, wo die größten Verluste über den repräsentativen Zeitraum bisher aufgetreten sind. Danach zur zweitgrößten Fehlerquelle usw.
18) Geteilten Ressourcenbedarf ermitteln: Wenn mehrere Schritte regelmäßig auf die gleiche Ressource zugreifen (beispielsweise eine zentrale Laserstrahlquelle, einen Produktions-Mitarbeiter, der regulär für mehrere manuelle Tätigkeiten verantwortlich ist, zentrale Wärme-/Kälteerzeugung usw.), dann er mittele eine durchschnittlich gleichzeitig benötigte Ressourcenzahl über einen repräsentativen Zeitraum (gleitender Mittelwert) und veranlasse Anpassung dieser Ressourcenstärke.
19) Geteilte Ressourcen prognostizierbar machen: Wenn mehrere Prozesse regelmäßig auf die gleiche Ressource (z. B. Zentrale Strahlerzeugung, Mitarbeiter o. ä.) zugreifen, dann melde bei der Ressource einen Bedarf an, sobald das Merkmal "in x Sekunden wird die geteilte Ressource zu y Wahrscheinlichkeit benötigt" erfüllt ist. Dabei können x und y geeignet vergeben werden, so dass die Ressource zum benötigten Zeitpunkt am Ort ist, wo Sie benötigt wird. Dies ist sowohl mit teilbaren (z.B. Strom, Prozesswasser, Wärme/Kälte, etc.) als auch unteilbaren (z.B. in die Produktion eingebundene MA, etc.) möglich.
20) Verhaltensanpassung der Anlage an Fehlerabhängigkeiten: Wenn ein Fehler in einem Schritt P2 auftritt, der auf einem Merkmal basiert, welches im vorgelagerten Schritt P1 erzeugt wird, dann halte alle Schritte zwischen dem Schritt P1 und einem nachgelagerten Schritt P3 an. Die restlichen Schritte können weiterlaufen, unabhängig von einer Puffergröße.
21) Verhaltensanpassung der Anlage an technologische Abhängigkeiten: Wenn ein Fehler in einem Schritt P2 auftritt, hält der Schritt an, um die technologische Abhängigkeit zu einem nachgelagerten Schritt P4 zu prüfen (z.B. Bauteil muss noch warm sein bei seiner Bearbeitung). Falls die Durchlaufzeit um einen bestimmten Betrag überschritten ist bzw. von der statistisch ermittelten DLZ abweicht (Regel 12),dann kann das entsprechende Bauteil als Ausschuss ohne Bearbeitung durgeschleust oder das Bauteil als Ausschuss am Ende separat geprüft werden und dort aussortiert werden. Alternativ ist eine Anpassung der Prozessparameter über die Maschinenschnittstelle im Schritt P4 an die neue spezifische DLZ des wartenden Bauteils möglich.

Ergebnisse der schnellen Abhängigkeitsanalyse können beispielsweise folgende sein:
- Taktlängen-Abgleich und Synchronität der Taktung
- Auslastung der Einzel- und Gesamtprozesse
- Fehlerursachen und Auswirkungen
- Fehlerklassen und deren Häufigkeit
- Fehlerabhängigkeiten zwischen einzelnen Schritten und Fehlerausprägungen
- Kritischer Pfad für die Produktivität und somit Optimierungsansatz
- Geteilten Ressourcenbedarf steuern
- Unterstützung der kontinuierlichen Verhaltensanpassung der Anlage auf auftretende Fehler (Selbstoptimierender Regelkreis bei Maschinenanbindung)
- Einstellen einer höchstmöglichen Produktivität durch die Priorisierung der auftretenden Fehler und somit eine gezielte Entstörreihenfolge für den Mitarbeiter
- Erhebung von Abhängigkeits-Trends für die mittelfristige Technologieoptimierung
- Anlagenbetreiber: Bewertung und Optimierung bestehender Systeme
- Anlagenbewertung bei Abnahme / Auslieferung
- Alternative Konzeptentwicklung, Erkennung bestehender Stärken / Schwächen
- Anlagenbewertung bei Veräußerung / Ankauf
- Dauerhafte Installation zwecks Echtzeitüberwachung und daraus geschlossene Echtzeit-Simulation von zeitnahen Ereignissen und Ableitung von Erwartungswerten hinsichtlich Durchlaufzeiten und Störungsauswirkungen
- Dauerhafte Installation und Integration zwecks kontinuierlicher Selbstoptimierung der Anlage und auslastungsorientierte Ressourcenkoordination

Ein Vergleich von Sensordaten, die Bilddaten sind, mit entsprechenden Soll-Sensordaten kann z. B. wie folgt erfolgen:
- Pixelweiser Vergleich der Grauwerte des aufgenommenen Bildes mit dem Soll-Bild im betrachteten Bereich 33 (Sollbild, Ist-Bild)
- Fehlerquadratauswertung mit Toleranzeingabe bezogen auf Mittelwert über gesamten Betrachtungsbereich 33 (Region of Interest, ROI)
- Framerate in sec
- Referenz als Zustandsdefinition über Frame-Nr. einlernen

Im Detail können folgende Schritte ausgeführt wurden:
1. Schritt
   - Video importieren,
   - Projekt speichern
2. Schritt
   - Spulen bis gewünschter Zustand sichtbar
   - ROI festlegen
3. Schritt
   - Einstellungen
   - Referenz: "Framenr="Name"; (z.B. 254=leer;408=Hintergrund)
   - Szene: Kamerabild oder Ort für mehrere Kameras die gleiche Position beobachten
   - Einstellen der Toleranzschwelle für Zuordnung
   - Speichern
4. Schritt:
   - Schritt 2 und 3 für alle gewünschten Merkmale wiederholen
5.Schritt:
   - Importierten Videostream nach definierten Merkmalen durchsuchen und in Datenbank schreiben lassen

## Patentansprüche

1. Verfahren zur Überwachung eines Fertigungs- und/oder Montageprozesses,
wobei ein Ablauf des Fertigungs- und/oder Montageprozess zumindest einen vorgelagerten Schritt, einen Hauptschritt und einen nachgelagerten Schritt aufweist,
wobei zumindest der vorgelagerte Schritt, der Hauptschritt und der nachgelagerte Schritt jeweils durch zumindest einen Sensorsignale erzeugenden Sensor beobachtet werden,
wobei die Sensorsignale jeweils eines Ablaufs miteinander synchronisiert werden, so dass zu zumindest einem Betrachtungszeitpunkt zumindest ein Sensorsignal jedes durch einen der Sensoren beobachteten Schrittes vorliegt,
wobei die zumindest einen Sensorsignale der beobachteten Schritte jeweils mit entsprechenden Soll-Werten oder Soll-Sensorsignalen verglichen werden,
wobei die entsprechenden Soll-Werte oder Soll-Sensorsignale zumindest bereichsweise jeweils einer Ausprägung zumindest eines Merkmals jenes Schrittes zugeordnet sind, der durch den das entsprechende Sensorsignal erzeugenden Sensor beobachtet wird,
wobei aus dem Vergleich die Ausprägung des zumindest einen Merkmals abgeleitet wird,
wobei die ermittelten Ausprägungen der Merkmale der mindestens drei Schritte zu zumindest einem der Betrachtungszeitpunkte mit Kombinationen von vorgegebenen Ausprägungen der entsprechenden Merkmale verglichen werden und aus dem Vergleich ein Ergebnis der Überwachung abgeleitet wird,
wobei die Ableitung des Ergebnisses aus den Ausprägungen der betrachteten Merkmale erfolgt, indem die Ausprägungen der Merkmale mit vorgegebenen Ausprägungen verglichen werden, die in einer Regelbibliothek Ergebnissen zugeordnet sind,
wobei das Ergebnis der Überwachung eine oder mehrere der folgenden Informationen umfasst: Taktabstimmung, Synchronität der Schritte eines Ablaufs, Auslastung eines oder mehrerer der Schritte, ein leerer Werkstückträger, Geschwindigkeitsverlust, eine statistische Durchlaufzeit, eine Fehlerkette zwischen einem Fehlerverursacher und einem Fehlerentdecker,
eine priorisierte Reihenfolge für unterstützende Maßnahmen an verteilten Orten, ein geteilter Ressourcenbedarf, eine Prognose über eine zu teilende unteilbare oder teilbare Ressource.

2. Verfahren nach dem vorhergehenden Anspruch, wobei einer, mehrere oder alle der Sensoren optische Sensoren und/oder Kameras sind, die Bildsignale als Sensorsignale erzeugen.

3. Verfahren nach einem der vorhergehenden Ansprüche,
wobei der jeweilige Sollwert und/oder das jeweilige Soll-Sensorsignal im entsprechenden Bereich dadurch der Ausprägung des zumindest einen Merkmals zugeordnet wird, dass ein Sensorsignal als Sollwert oder Soll-Sensorsignal aufgenommen wird, welches der Sensor bei Beobachtung des entsprechenden Schrittes aufnimmt, wenn in dem entsprechenden Schritt das entsprechende Merkmal oder die entsprechenden Merkmale die entsprechenden Ausprägungen haben.

4. Verfahren nach einem der vorhergehenden Ansprüche,
wobei zumindest eines der Merkmale zumindest eines der Schritte eines oder mehrere der folgenden Merkmale umfasst: Vorhandensein eines Bauteils in einer Auslieferposition, Vorhandensein eines Bauteils in einer Bearbeitungsposition, Vorhandensein eines Bauteils in einer Anlieferungsposition, Korrektheit eines in einer Bearbeitungsposition vorhandenen Objektes, ein Zustand zumindest eines Betriebsmittels und/oder Mitarbeiters zu Prozessbeginn, ein Zustand zumindest eines Betriebsmittels und/oder Mitarbeiters zum Prozessende, Wartezustand eines Betriebsmittels und/oder Mitarbeiters, Betriebsbereitheit zumindest eines Betriebsmittels, Anwesenheit eines Mitarbeiters in einer Arbeitsposition, Manuelles Eingreifen in den Prozess, Agieren eines Betriebsmittels und/oder Mitarbeiters in einem gesperrten Bereich, Bedarf einer geteilten Ressource, Identifizierung eines im entsprechenden Schritt bearbeiteten Objektes anhand einer dem Objekt zugeordneten eindeutigen Markierung oder eines festgelegten Musters,
Anwesenheit eines Objektes mit vorgegebenen Eigenschaften, Vollständigkeit von Objekten, die im entsprechenden Schritt vorliegen sollten, Lage und/oder Orientierung eines im entsprechenden Schritt bearbeiteten Objektes, Form und/oder Maß eines im entsprechenden Schritt bearbeiteten Objektes, Beschaffenheit zumindest einer Oberfläche eines im entsprechenden Schritt bearbeiteten Objektes, zumindest eine Eigenschaft eines Inneren eines im entsprechenden Schritt bearbeiteten Objektes, eine Geschwindigkeit eines Bauteils oder eines Werkstückträgers.

5. Verfahren nach einem der vorhergehenden Ansprüche,
wobei, wenn ein Sensorsignal keinem Soll-Sensorsignal des entsprechenden Schrittes entspricht, das Sensorsignal einem Benutzer angezeigt wird und mögliche Ausprägungen des entsprechenden Merkmals zur Auswahl vorgeschlagen werden, so dass der Benutzer das Sensorsignal einer Ausprägung des Merkmals zuordnen kann.

6. Verfahren nach einem der vorhergehenden Ansprüche,
wobei die über einen vorgegebenen Zeitraum ermittelten Ergebnisse echtzeitnah an das überwachte System zur Verhaltensanpassung zurückgegeben werden können und/oder ein über einen repräsentativen Zeitraum gewonnene Ergebnisse als Trends zurückgegeben werden können.

7. Verfahren nach einem der vorhergehenden Ansprüche,
wobei anhand zumindest eines der Ergebnisse der Überwachung zumindest einer der Schritte modifiziert wird, so dass der Zustand des entsprechenden Schrittes genauer mit einem angestrebten und/oder vorgegebenen Zustand übereinstimmt.

8. Verfahren nach einem der Ansprüche 2 bis 7, wobei die Sensorsignale mit den Soll-Sensorsignalen verglichen werden, indem für zumindest einen Teil der Pixel im zum Vergleich herangezogenen Bereich Pixelintensitäten des aufgenommenen Sensorsignals mit Pixelintensitäten des Sollsensorsignales verglichen werden und die Sensorsignale als
übereinstimmend gewertet werden, wenn ein Mittelwert der Beträge der Differenzen zwischen den Pixelintensitäten des aufgenommenen Sensorsignals und des Soll-Sensorsignals kleiner ist als ein vorgegebener Toleranzwert.

9. Vorrichtung zur Überwachung eines Fertigungs- und/oder Montageprozesses,
wobei ein Ablauf des Fertigungs- und/oder Montageprozess zumindest einen vorgelagerten Schritt, einen Hauptschritt und einen nachgelagerten Schritt aufweist,
aufweisend zumindest drei Sensorsignale erzeugende Sensoren, mit denen jeweils einer der Schritte des Ablaufs beobachtbar ist,
weiter aufweisend eine Synchronisationseinheit, mit der die Sensorsignale jeweils eines Ablaufs miteinander synchronisierbar sind, so dass zu zumindest einem Betrachtungszeitpunkt zumindest ein Sensorsignal jedes durch einen der Sensoren beobachteten Schrittes vorliegt, weiter aufweisend eine Vergleichseinheit, mit der die zumindest einen Sensorsignale der beobachteten Schritte jeweils mit entsprechenden Soll-Werten oder Soll-Sensorsignalen vergleichbar sind, wobei die entsprechenden Soll-Werte oder Soll-Sensorsignale zumindest bereichsweise jeweils einer Ausprägung zumindest eines Merkmals jenes Schrittes zugeordnet sind, der durch den das entsprechende Sensorsignal erzeugenden Sensor beobachtet wird,
sowie weiter aufweisend eine Ergebniseinheit, mit der aus dem Vergleich die Ausprägung des zumindest einen Merkmals ableitbar ist, und mit der die ermittelten Ausprägungen der Merkmale der mindestens drei Schritte zu zumindest einem der Betrachtungszeitpunkte mit vorgegebenen Ausprägungen der entsprechenden Merkmale vergleichbar sind und aus dem Vergleich ein Ergebnis der Überwachung ableitbar ist,
wobei die Ableitung des Ergebnisses aus den Ausprägungen der betrachteten Merkmale erfolgt, indem die Ausprägungen der Merkmale mit vorgegebenen Ausprägungen verglichen werden, die in einer Regelbibliothek Ergebnissen zugeordnet sind,
wobei das Ergebnis der Überwachung eine oder mehrere der folgenden Informationen umfasst: Taktabstimmung, Synchronität der Schritte eines Ablaufs, Austastung eines oder mehrerer der Schritte, ein leerer Werkstückträger, Geschwindigkeitsverlust, eine statistische Durchlaufzeit, eine Fehlerkette zwischen einem Fehlerverursacher und einem Fehlerentdecker, eine priorisierte Reihenfolge für unterstützende Maßnahmen an verteilten Orten, ein geteilter Ressourcenbedarf, eine Prognose über eine zu teilende unteilbare oder teilbare Ressource.

10. Vorrichtung nach dem vorhergehenden Anspruch,
wobei die Sensoren ohne Modifizierung einer zur Ausführung des Fertigungs- und/oder Montageprozesses verwendeten Vorrichtung zu unterschiedlichen Schritten versetzbar sind.

11. Vorrichtung nach dem vorhergehenden Anspruch, **gekennzeichnet durch** eine Schnittstelle, über welche die Vorrichtung mit einer Vorrichtung zu Ausführung des überwachten Fertigungs- und/oder Montageprozesse koppelbar ist, so dass Ergebnisse der Überwachung an die Vorrichtung zu Ausführung des überwachten Fertigungs- und/oder Montageprozesse echtzeitnah rückkoppelbar sind.

12. Vorrichtung nach dem vorhergehenden Anspruch, wobei mit der Vorrichtung ein Verfahren nach einem der Ansprüche 1 bis 8 ausführbar ist.

## Claims

1. Method for monitoring a manufacturing and/or assembly process,
a course of the manufacturing and/or assembly process having at least an upstream step, a main step and a downstream step,
at least the upstream step, the main step and the downstream step respectively being observed by at least one sensor producing sensor signals,
the sensor signals respectively of a course being synchronised together so that, at at least one observation time, at least one sensor signal of each step observed by one of the sensors is present,
the at least one sensor signals of the observed steps respectively being compared with corresponding reference values or reference sensor signals,
the corresponding reference values or reference sensor signals being assigned, at least in regions, respectively to one characteristic of at least one feature of that step which is observed by the sensor producing the corresponding sensor signal,
the characteristic of the at least one feature being derived from the comparison,
the determined characteristics of the features of the at least three steps being compared, at at least one of the observation times, with combinations of prescribed characteristics of the corresponding features, and a result of the monitoring being derived from the comparison,
the derivation of the result being effected from the characteristics of the observed features by the characteristics of the features being compared with prescribed characteristics which are assigned to results in a regulation library,
the result of the monitoring comprising one or more of the following data: cycle coordination, synchronicity of the steps of a course, utilisation of one or more of the steps, an empty workpiece carrier, speed loss, a static throughput time, an error chain between an error originator and an error detector,
a prioritised sequence for supporting measures at distributed locations, a shared resource requirement, a prognosis about a non-shareable or shareable resource to be shared.

2. Method according to the preceding claim, one, more or all of the sensors being optical sensors and/or cameras which produce image signals as sensor signals.

3. Method according to one of the preceding claims,
the respective reference value and/or the respective reference sensor signal in the corresponding region being assigned to the characteristic of the at least one feature, as a result of a sensor signal being received as reference value or reference sensor signal which the sensor receives when observing the corresponding step if, in the corresponding step, the corresponding feature or the corresponding features have the corresponding characteristics.

4. Method according to one of the preceding claims,
at least one of the features comprising at least one of the steps of one or more of the following features: presence of a component in a delivery position, presence of a component in a machining position, presence of a component in a supply position, correctness of an object present in a machining position, a state of at least one operating means and/or co-worker at the beginning of the process, a state of at least one operating means and/or co-worker at the end of the process, waiting state of an operating means and/or co-worker, operational readiness of at least one operating means, presence of a co-worker in an operating position, manual intervention in the process, performance of an operating means and/or co-worker in a blocked region, requirement of a shared resource, identification of an object machined in the corresponding step by means of an unequivocal marking assigned to the object or of an established pattern,
presence of an object with prescribed properties, completeness of objects which should be present in the corresponding step, location and/or orientation of an object machined in the corresponding step, form and/or size of an object machined in the corresponding step, condition of at least one surface of an object machined in the corresponding step, at least one property of an inside of an object machined in the corresponding step, a speed of a component or of a workpiece carrier.

5. Method according to one of the preceding claims,
wherein if a sensor signal corresponds to no reference sensor signal of the corresponding step, the sensor signal is displayed for a user and possible characteristics of the corresponding feature are proposed for selection so that the user can assign the sensor signal to a characteristic of the feature.

6. Method according to one of the preceding claims,
the results determined over a prescribed time being able to be returned in near real-time to the monitored system for behaviour adaptation and/or a result obtained over a representative time being able to be returned as trend.

7. Method according to one of the preceding claims,
at least one of the steps being modified by means of at least one of the results of the monitoring so that the state of the corresponding step corresponds more precisely with a sought and/or prescribed state.

8. Method according to one of the claims 2 to 7,
the sensor signals being compared with the reference sensor signals by, for at least a part of the pixels in the region used for the comparison, pixel intensities of the received sensor signal being compared with pixel intensities of the reference sensor signal and the sensor signals being evaluated as corresponding when an average of the amounts of the differences between the pixel intensities of the received sensor signal and of the reference sensor signal is less than a prescribed tolerance value.

9. Device for monitoring a manufacturing and/or assembly process, a course of the manufacturing and/or assembly process having at least an upstream step, a main step and a downstream step,
the device having at least three sensors producing sensor signals, with which respectively one of the steps of the course can be observed,
furthermore having a synchronisation unit with which the sensor signals respectively of one course can be synchronised with each other so that, at at least one observation time, at least one sensor signal of each step observed by one of the sensors is present, furthermore having a comparison unit with which the at least one sensor signals of the observed steps respectively can be compared with corresponding reference values or reference sensor signals, the corresponding reference values or reference sensor signals being assigned, at least in regions, respectively to one characteristic of at least one feature of that step which is observed by the sensor producing the corresponding sensor signal,
and also furthermore having a result unit with which the characteristic of the at least one feature can be derived from the comparison, and with which the determined characteristics of the features of the at least three steps can be compared, at at least one of the observation times, with prescribed characteristics of the corresponding features and a result of the monitoring can be derived from the comparison,
the derivation of the result being effected from the characteristics of the observed features by the characteristics of the features being compared with the prescribed characteristics which are assigned to results in a regulation library,
the result of the monitoring comprising one or more of the following data: cycle coordination, synchronicity of the steps of a course, utilisation of one or more of the steps, an empty workpiece carrier, speed loss, a static throughput time, an error chain between an error originator and an error detector, a prioritised sequence for supporting measures at distributed locations, a shared resource requirement, a prognosis about a non-shareable or shareable resource to be shared.

10. Device according to the preceding claim,
the sensors being displaceable without modification of a device used for implementing the manufacturing and/or assembly process at different steps.

11. Device according to the preceding claim, **characterised by** an interface, via which the device can be coupled to a device for implementing the monitored manufacturing and/or assembly process, so that results of the monitoring can be fed back to the device for implementing the monitored manufacturing and/or assembly process in near real-time.

12. Device according to the preceding claim, a method according to one of the claims 1 to 8 being able to be implemented with the device.

## Revendications

1. Procédé pour la surveillance d'un processus de fabrication et/ou de montage,
un déroulement du processus de fabrication et/ou de montage comprenant au moins une étape amont, une étape principale et une étape aval,
au moins l'étape amont, l'étape principale et l'étape aval étant observées chacune à l'aide d'au moins un capteur générant des signaux de capteur,
les signaux de capteur de chaque processus étant synchronisés entre eux de façon à ce qu'à au moins un moment d'observation, il existe au moins un signal de capteur de chaque étape observée par un des capteurs,
les, au moins un, signaux de capteurs des étapes observées étant comparés chacun avec des valeurs de consigne ou des signaux de capteurs de consigne correspondants,
les valeurs de consigne ou les signaux de capteurs de consigne correspondants étant attribués chacun, au moins à certains endroits, à une expression d'au moins une caractéristique de cette étape, qui est observée par le capteur générant le signal de capteur correspondant,
l'expression de l'au moins une caractéristique étant déduite à partir de la comparaison,
les expressions déterminées des caractéristiques des au moins trois étapes étant comparées, à au moins un des moments d'observation, avec des combinaisons d'expression prédéterminée des caractéristiques correspondantes et un résultat de surveillance étant déduit de la comparaison,
la déduction du résultat à partir des expressions des caractéristiques observées ayant lieu grâce au fait que les expressions des caractéristiques sont comparées avec des expressions prédéterminées qui correspondent à des résultats dans une bibliothèque de règles,
le résultat de la surveillance comprenant une ou plusieurs des informations suivantes : cadencement, synchronicité des étapes d'un processus, taux d'utilisation d'une ou plusieurs des étapes, un porte-outil vide, perte de vitesse, un temps de cycle statistique, une chaîne d'erreurs entre une source d'erreurs et un détecteur d'erreurs,
un ordre priorisé pour des mesures à appliquer à des endroits répartis, des besoins en ressources partagés, un pronostic concernant une ressource indivisible ou divisible à partager.

2. Procédé selon la revendication précédente, un, plusieurs ou tous les capteurs étant des capteurs optiques et/ou des caméras, qui génèrent des signaux d'images en tant que signaux de capteurs.

3. Procédé selon l'une des revendications précédentes,
la valeur de consigne respective et/ou le signal de capteur de consigne respective correspond, dans la zone correspondante, à l'expression de l'au moins une caractéristique de façon à ce qu'un signal de capteur soit pris en compte en tant que valeur de consigne ou que signal de capteur de consigne, que le capteur reçoit lors de l'observation de l'étape correspondante lorsque, dans l'étape correspondante, la caractéristique correspondante ou les caractéristiques correspondantes présentent les expressions correspondantes.

4. Procédé selon l'une des revendications précédentes,
au moins une des caractéristiques d'au moins une des étapes comprenant une ou plusieurs des caractéristiques suivantes : présence d'un composant dans une position de livraison sortante, présence d'un composant dans une position d'usinage, présence d'un composant dans une position de livraison entrante, exactitude d'un objet dans une position d'usinage, un état d'au moins un équipement et/ou collaborateur au début du processus, un état d'au moins un équipement et/ou collaborateur à la fin du processus, état d'attente d'un équipement et/ou collaborateur, préparation à fonctionner d'au moins un équipement, présence d'un collaborateur dans une position de travail, intervention manuelle dans le processus, action d'un équipement et/ou collaborateur dans une zone bloquée, besoin en ressource divisée, identification d'un objet usiné dans l'étape correspondante à l'aide d'un marquage unique ou d'un motif déterminé correspondant à l'objet,
présence d'un objet avec des propriétés prédéterminées, intégrité d'objets qui doivent se trouver dans l'étape correspondante, position et/ou orientation d'un objet usiné dans l'étape correspondante, forme et/ou dimensions d'un objet usiné dans l'étape correspondante, qualité d'au moins une surface d'un objet usiné dans l'étape correspondante, au moins une propriété d'un intérieur d'un objet usiné dans l'étape correspondante, une vitesse d'un composant ou d'un porte-outil.

5. Procédé selon l'une des revendications précédentes,
moyennant quoi, lorsqu'un signal de capteur ne correspond à aucun signal de capteur de consigne de l'étape correspondante, le signal de capteur est affiché à un utilisateur et des expressions possibles de la caractéristique correspondante sont proposées à la sélection, de façon à ce que l'opérateur puisse attribuer le signal de capteur à une expression de la caractéristique.

6. Procédé selon l'une des revendications précédentes,
les résultats déterminés sur une période prédéterminée pouvant être retournés presque en temps réel au système surveillé pour l'adaptation du comportement et/ou des résultats obtenus sur une période représentative pouvant être retournés sous la forme d'une tendance.

7. Procédé selon l'une des revendications précédentes,
moyennant quoi, à l'aide d'au moins un des résultats de la surveillance, au moins une des étapes est modifiée de façon à ce que l'état de l'étape correspondante coïncide de manière plus exacte avec un état souhaité et/ou prédéterminé.

8. Procédé selon l'une des revendications 2 à 7, les signaux de capteurs étant comparés avec les signaux de capteurs de consigne, grâce au fait que, pour au moins une partie des pixels dans la zone utilisée pour la comparaison, les intensités de pixels du signal de capteur enregistré sont comparées avec les intensités des pixels du signal de capteur de consigne et les signaux de capteurs sont considérés comme coïncidant lorsqu'une valeur moyenne des montants des différences entre les intensités des pixels du signal de capteur enregistré et du signal de capteur de consigne est inférieure à une valeur de tolérance prédéterminée.

9. Dispositif de surveillance d'un processus de fabrication et/ou de montage,
un déroulement du processus de fabrication et/ou de montage comprenant au moins une étape amont, une étape principale et une étape aval,
comprenant au moins trois capteurs générant des signaux de capteurs, avec chacun desquels une des étapes du processus peut être observée,
comprenant en outre une unité de synchronisation avec laquelle les signaux de capteurs de chaque processus sont synchronisés entre eux de façon à ce que, à au moins un moment d'observation, il existe au moins un signal de capteur de chaque étape observée par un des capteurs, comprenant en outre une unité de comparaison avec laquelle les, au moins un, signaux de capteurs des étapes observées peuvent être comparés avec des valeurs de consigne ou des signaux de capteurs de consigne, les valeurs de consigne ou les signaux de capteurs de consigne correspondants étant attribués, au moins à certains endroits, à une expression d'au moins une caractéristique de cette étape, qui est observé grâce au capteur générant le signal de capteur correspondante,
et comprenant en outre une unité de résultats avec laquelle, à partir de la comparaison, l'expression de l'au moins une caractéristique peut être déduite et avec laquelle les expressions déterminées des caractéristiques des au moins trois étapes à au moins un des moments d'observation peuvent être comparées avec des expressions prédéterminées des caractéristiques correspondantes et, à partir de la comparaison, un résultat de la surveillance peut être déduit,
la déduction du résultat à partir des expressions des caractéristiques observées ayant lieu grâce au fait que les expressions des caractéristiques sont comparées avec des expressions prédéterminées qui correspondent à des résultats dans une bibliothèque de règles,
le résultat de la surveillance comprenant une ou plusieurs des informations suivantes : cadencement, synchronicité des étapes d'un processus, taux d'utilisation d'une ou plusieurs des étapes, un porte-outil vide, perte de vitesse, un temps de cycle statistique, une chaîne d'erreurs entre une source d'erreurs et un détecteur d'erreurs, un ordre priorisé pour des mesures à appliquer à des endroits répartis, des besoins en ressources partagés, un pronostic concernant une ressource indivisible ou divisible à partager.

10. Dispositif selon la revendication précédente,
les capteurs pouvant être posés à différentes étapes sans modifier un dispositif utilisé pour l'exécution du processus de fabrication et/ou de montage.

11. Dispositif selon la revendication précédente, **caractérisé par** une interface par l'intermédiaire de laquelle le dispositif peut être couplé avec un dispositif pour l'exécution du processus de fabrication et/ou de montage surveillé, de façon à ce que les résultats de la surveillance puissent être retournés au dispositif pour l'exécution du processus de fabrication et/ou de montage surveillé presque en temps réel.

12. Dispositif selon la revendication précédente, un procédé selon l'une des revendications 1 à 8 pouvant être exécuté avec le dispositif.
